# EUROPÄISCHE PATENTSCHRIFT

(11) **EP 3 237 652 B1**
(45) Veröffentlichungstag und Bekanntmachung des Hinweises auf die Patenterteilung: **26.06.2024**
(21) Anmeldenummer: 15817198.3
(22) Anmeldetag: 16.12.2015
(51) Int. Cl.: C01B 25/37, C01B 25/45

(54) **VERFAHREN ZUR HERSTELLUNG VON ANISOTROPEN ZINKPHOSPHAT-PARTIKELN UND ZINK-METALL-MISCHPHOSPHATPARTIKELN UND IHRE VERWENDUNG**
METHOD FOR PRODUCING ANISOTROPIC ZINC PHOSPHATE PARTICLES AND ZINC METAL MIXED PHOSPHATE PARTICLES AND USE THEREOF
PROCÉDÉ DE PRODUCTION DE PARTICULES ANISOTROPES DE PHOSPHATE DE ZINC ET DE PHOSPHATE MIXTE ZINC/MÉTAL ET LEUR UTILISATION

(30) Priorität: 22.12.2014 DE 102014119472
(43) Veröffentlichungstag der Anmeldung: 01.11.2017
(73) Patentinhaber: INM - Leibniz-Institut für Neue Materialien gemeinnützige GmbH, 66123 Saarbrücken (DE)
(72) Erfinder: ALBAYRAK, Sener, 66123 Saarbrücken (DE); BECKER-WILLINGER, Carsten, 66130 Saarbrücken (DE); BENTZ, Dirk, 76829 Landau (DE); PERRE, Emilie Marie, 57915 Woustwiller (FR)
(74) Vertreter: Patentanwälte Gierlich & Pischitzis Partnerschaft mbB
(86) Internationale Anmeldenummer: PCT/EP2015/079960
(87) Internationale Veröffentlichungsnummer: WO 2016/102265

(56) Entgegenhaltungen:
- EP-A1- 1 988 189
- US-A1- 2006 113 005
- US-A1- 2011 008 645
- DATABASE WPI Week 200041 Thomson Scientific, London, GB; AN 2000-468133 XP002755080, -& JP 2000 154010 A (FUJI KAGAKU KOGYO KK) 6. Juni 2000 (2000-06-06)
- DATABASE WPI Week 199342 Thomson Scientific, London, GB; AN 1993-331591 XP002755081, -& JP H05 239376 A (NIPPON CHEM IND CO LTD) 17. September 1993 (1993-09-17)

## Beschreibung

### Gebiet der Erfindung

Die Erfindung betrifft ein Verfahren zur Herstellung von anisotropen plättchenförmigen Zinkphosphat-Partikeln und Zink-Metall-Mischphosphatpartikeln.

Zinkphosphate in disperser Phase finden breite Anwendung im Bereich des Korrosionsschutzes, insbesondere für niedrig legierte Stähle. Zink-Metall-Mischphosphate werden zum einen in mikroskaliger Form als pigmentförmige Additive in Lacken verwendet. Sie besitzen zumeist eine breite Partikelgrößenverteilung und sind uneinheitlich bezüglich ihrer Partikelform sowie ihres Agglomerationszustandes. Aufgrund der Dimensionen der vorhandenen Agglomerate im Mikrometerbereich lassen sie sich beispielsweise nicht unter Erhalt der optischen Transparenz in Klarlacken dispergieren. Zusätzlich wird die Dispergierung in organischen Lacken durch die Hydrophilie der Zink-Phosphat-Oberfläche erschwert, welche eine an das Bindemittel angepasste spezifische Oberflächenmodifizierung erforderlich macht, die wiederum in einem zusätzlichen Prozessschritt erfolgen muss. Zum anderen werden Zink-Metall-Mischphosphate weiterhin als wässrige Dispersionen zur Vorbehandlung von Stahlsubstraten mit dreidimensionaler Oberfläche über Tauchbeschichtungsverfahren eingesetzt. Darunter fallen der direkte Einsatz der Phosphate als Korrosionsschutz-Primer über stromlose Abscheidungsverfahren und ihre Verwendung als Additiv in Elektrotauchlacken. Weiterhin werden Zinkphosphate als Zemente in der Dentaltechnik eingesetzt.

DE1815112 [Hoechst] beschreibt einen Phosphathärter in pigmenthaltigen, alkali-silikat-basierten Anstrichfarben enthaltend Zink-, Eisen-, Blei-, Magnesiumphosphate und Mischungen derselben beinhaltend einem nachgeschalteten Temperprozess bei 550-900 °C. Die Zusammensetzungen besitzen ein Phosphoroxid:Eisenoxid-Verhältnis von 1:1-3:1. Bei den angegebenen Temperaturen lässt sich ein Zusammensintern der Primärpartikel nicht verhindern, so dass die erhaltenen Partikel stark agglomeriert vorliegen und nicht mehr vollständig redispergierbar sind. Sie sind damit für optische Anwendungen nicht geeignet.

DE2842150 [Hoechst] beansprucht ein Verfahren zur Herstellung fein verteilter Zinkphosphate ausgehend von Zinkoxid und Phosphorsäure in äquimolarem Verhältnis unter Einwirkung von Ultraschall (10-100 kHz, 1-50 kW/m³) in Wasser und anschließender Sprühtrocknung. Der letzte Schritt beinhaltet das Problem der Partikelagglomeration. Der Begriff "feinverteilt" wird definiert über eine Partikelgröße < 25 µm. Eine spezielle Oberflächenmodifizierung der Teilchen wird nicht vorgenommen.

DE3046697 A1 [Heubach] beansprucht Metalloxid, -phosphat, - molybdat sowie -chromat-Korrosionsschutzpigmente enthaltend Zink, Aluminium, Eisen, Erdalkalimetall, Chrom, Blei oder Titan als Metallkomponente, welche in wässriger Lösung bei 70-80 °C mit Phthalsäure bzw. Phthalsäureanhydrid behandelt werden. In ähnlicher Weise umfassen DE3605526A1 [Heubach] entsprechende Korrosionsschutzpigmente und deren Verwendung sowie DE3731737A1 [Heubach] solche auf Basis von Erdalkalihydrogenphosphat, insbesondere mit Magnesium bzw. Strontium. Alle genannten Partikelsorten besitzen eine breite Partikelgrößenverteilung mit einer mittleren Partikelgröße im Mikrometerbereich. Die kleinere Fraktion der Partikel reicht mit der Größenverteilung bis in den Submikrometerbereich. Die Partikel sind unförmig bis kugelförmig.

US 5030285 [Colores Hispania] beschreibt sphärische Zinkphosphat- / Eisenphosphat-Partikel als korrosions-inhibierendes Pigment hergestellt über eine Sulfatroute bei pH 7 / 80 °C mit einer Partikelgröße zwischen 0,5 µm und 5 µm. Der Kristallinitätsgrad des enthaltenen Zinkphosphats beträgt 10-70 %. Der amorphe Anteil enthält Eisenphosphat im Molverhältnis Zn:Fe 1:0,001 bis 1:0,3.

US 5137567 [Colores Hispania] beschreibt sphärisches Zinkphosphat-Dihydrat sowie - Tetrahydrat als korrosions-inhibierendes Pigment, welches 0,5 % bis 6 % Zinkoxid als Nebenbestandteil enthält. Die Synthese erfolgt ausgehend von Zinkoxid bei pH 7 durch Zugabe von Ammonium-chlorid-gepufferter Phosphorsäure.

EP 0896641 B1/ DE 69706161 T2 [PPG] beansprucht eine wässrige, saure Zusammensetzung zur Ausbildung einer Zinkphosphat und Wolfram enthaltenden Beschichtung auf einem Metallträger, enthaltend neben Zink- und Phosphationen sowie Wolfram auch einen Beschleuniger, ausgewählt aus einer aus einem Oxim, aus Mischungen eines Oxims mit Hydroxylaminsulfat bestehenden Gruppe sowie zusätzlich gegebenenfalls Fluorid-, Mangan-, Calcium- bzw. Magnesium-Ionen. Die Beschichtungszusammensetzung eignet sich aufgrund ihrer Ausführung bevorzugt zum Schutz von Aluminiumsubstraten.

US 4153479 [Oxy Metal Industries] beschreibt eine wässrige saure, Oxidationsmittel- und Alkalimetall-freie Zinkphosphat-Lösung ausgehend von Phosphorsäure und Zinkoxid, -hydroxid oder -carbonat, enthaltend Weinsäure oder Zitronensäure sowie deren Salze und gegebenenfalls Nickel. Alle notwendigen Komponenten werden in einem Reaktionsgefäß gleichzeitig gemischt. Bei pH-Werten zwischen 3,5 und 4,7 produziert die Lösung nach nasschemischem Auftrag eine mikrokristalline Zinkphosphatbeschichtung auf Eisen und Stahl.

Lubkowski et al. beschreiben die Herstellung von Zinkphosphat Nanomaterialien ausgehend von Zinknitrat, Di-Ammoniumphosphat und Zitronensäure. Die Lösung wird bei erhöhter Temperatur konzentriert, bis ein Gel entsteht, welches dann kalziniert wird. In einem zweistufigen Temperaturprozess mit einer Endtemperatur im Kalzinierungsschritt von 300 °C wird Zinkphosphat in Form von Hopeit erhalten. Die Kristallitgrößen der gebildeten Partikel werden aus den Röntgenspektren mit 40-130 nm berechnet. Elektronenmikroskopische Aufnahmen, die Hinweise auf die Partikel-Morphologie geben könnten, werden nicht gezeigt.

Yuan et al. beschreiben die Herstellung plättchenförmiger Hopeit Partikel aus Zinkoxid und Phosphorsäure bei pH 6-8 und einer Temperatur von 70 °C. Die Partikel sind lamellar mikrokristallin aufgebaut und von orthorhombischer sowie monokliner Kristallstruktur. Sie besitzen laut Elektronenmikroskopie eine blockförmige, granulare Morphologie bei einer mittleren Partikelgröße von 10 µm.

McCurdy et al. beschreiben die Metathese Synthese von α-Hopeit bei Raumtemperatur durch Mörsern von Zinkchlorid mit verschiedenen Phosphorverbindungen wie Na₃PO₄, Na₂HPO₄, NaH₂PO₄ und K₂HPO₄ und nachfolgendes Waschen mit Wasser und anschließend mit Aceton. Die Röntgenspektren nach dem Mörsern zeigen zunächst die Kristallstruktur von NaCl und nach dem Waschprozess diejenige von α-Hopeit welcher sich spontan bildet. Die elektronenmikroskopischen Aufnahmen zeigen plättchenförmige Partikel mit hohem Aspektverhältnis, insbesondere bei Verwendung von Na₃PO₄ als Phosphorverbindung.

JP 2000-154010A beschreibt die Herstellung von möglichst gleichmäßigen nicht plättchenförmigen Zinkphosphatpartikeln.

JP H05-239376A beschreibt die Herstellung von Zinkphosphatpartikeln mit Organophosphor-Chelatverbindungen, wobei sphärische Partikel hergestellt werden.

Aufgabe der vorliegenden Erfindung ist die Bereitstellung von einem Verfahren zur Herstellung Zinkphosphat- sowie Zink-Metall-Mischphosphat-Partikeln aus kostengünstigen Ausgangsverbindungen, die in ihrer Partikelform gezielt anisotrop einstellbar, und falls erforderlich, vollständig auf Primärteilchengröße dispergierbar sind.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird durch ein Verfahren zur Herstellung von anisotropen plättchenförmigen Zink-Phosphat-Partikeln oder anisotropen plättchenförmigen Zink-Metall-Mischphosphat-Partikeln gelöst, umfassend die folgenden Schritte:
a) Herstellen einer Zusammensetzung umfassend mindestens eine Phosphatverbindung; mindestens eine Zinkverbindung und mindestens einen Chelatkomplexbildner mit mindestens zwei sauerstoffhaltigen Gruppen, ausgewählt aus der Gruppe umfassend Karbonsäuregruppen, Karbonsäureanhydridgruppen, Ethergruppen, Estergruppen, Ketogruppen und Hydroxylgruppen, und mindestens ein Lösungsmittel,
b) Bildung von anisotropen Zink-Phosphat-Partikeln oder Zink-Metall-Mischphosphat-Partikeln;
c) Abtrennung der erhaltenen plättchenförmigen Partikel, wobei die Bildung der Partikel für mindestens 10 Stunden erfolgt, wobei die Partikel in mindestens zwei Dimensionen eine Ausdehnung von mindestens 1 µm aufweisen, und die Partikel ein Aspektverhältnis von > 2 von Länge zu Dicke aufweisen und die maximale Ausdehnung der Partikel bei 100 µm liegt.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Durch die Herstellung einer Zusammensetzung aus der mindestens einen Zinkverbindung und mindestens einem Chelatkomplexbildner mit mindestens zwei sauerstoffhaltigen Gruppen werden die Zn²⁺-Ionen in dieser Zusammensetzung durch den Chelatkomplexbildner komplexiert. Durch die Anwesenheit des Chelatkomplexbildners und die konzentrationsgesteuerte Reaktionsgeschwindigkeit der Nukleations- und Fällungsreaktion bilden sich nur wenige Nuklei, die in Abhängigkeit von der Konzentration des Komplexbildners zeitlich verzögert und anisotrop weiterwachsen. Die Kombination von mangelkonzentrationsgesteuerter Zinkphosphat-Fällungskinetik und gleichzeitiger Komplexierung von Zn²⁺-Ionen mittels eines Chelatkomplexbildners mit mindestens zwei sauerstoffhaltigen Gruppen führt überraschenderweise zu dünnen, kristallinen Partikeln bevorzugt mit orthorhombischer Kristallstruktur (Zn₃(PO₄)₂ * 4 H₂O) und plättchenförmiger Morphologie sowie hohem Aspektverhältnis.

Die Abtrennung der Partikel kann beispielsweise eine Isolation der Partikel umfassen. Dies kann beispielsweise durch Filtration, Zentrifugation und/oder Sedimentation geschehen. Die Partikel können auch noch gewaschen werden. Das Abtrennen kann aber auch eine Weiterverarbeitung als Suspension beinhalten, ohne dass die Partikel isoliert werden.

In einer Ausführungsform der Erfindung werden die Partikel in einem letzten Schritt isoliert. Darunter wird die Abtrennung der Partikel von der Reaktionslösung verstanden. Dies kann beispielsweise durch Zentrifugation und/oder Sedimentation geschehen. Die Partikel können danach als Dispersion wieder aufgenommen werden oder auch getrocknet werden.

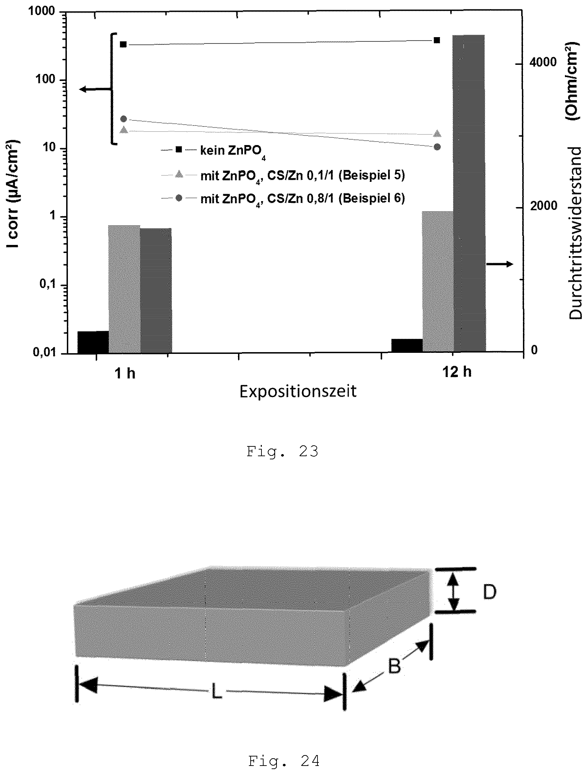

Die hergestellten Partikel weisen eine plättchenförmige Partikelmorphologie auf, mit einem Aspektverhältnis > 2, besonders bevorzugt >3. Unter einem Aspektverhältnis wird das Verhältnis von Länge zu Dicke (L/D) verstanden. Plättchenförmige Partikel weisen dieses Verhältnis in zwei Partikeldimensionen auf (L/D, B/D, Figur 24). Dabei bezieht sich das Aspektverhältnis bevorzugt auf die mittlere Länge und Dicke eines Teilchens. Die Daten können mit REM ermittelt werden. Bevorzugt werden die Dimensionen der Partikel dadurch ermittelt, dass durch REM-Aufnahmen eines zufälligen Ausschnitts die Ausmaße von 20 Einzelpartikeln erfasst werden.

Die Partikel weisen in mindestens zwei Dimensionen eine Ausdehnung von mindestens 1 µm auf. Dies lässt sich durch Auswertung mittels REM bestimmen. Bevorzugt werden die Dimensionen der Partikel dadurch ermittelt, dass durch REM-Aufnahmen eines zufälligen Ausschnitts die Ausmaße von 20 Einzelpartikeln erfasst werden.

In einer Ausführungsform haben die Partikel eine Dimension mit einer Ausdehnung von mindestens 2 µm (gemessen mit REM) und eine Dimension mit einer Ausdehnung von mindestens 1 µm. Bevorzugt werden die Dimensionen der Partikel dadurch ermittelt, dass durch REM-Aufnahmen eines zufälligen Ausschnitts die Ausmaße von 20 Einzelpartikeln erfasst werden.

Die maximale Ausdehnung der Partikel liegt bei 100 µm, besonders bevorzugt bei 50 µm. Bevorzugt werden die Dimensionen der Partikel dadurch ermittelt, dass durch REM-Aufnahmen eines zufälligen Ausschnitts die Ausmaße von 20 Einzelpartikeln erfasst werden.

Bevorzugt fallen mindestens 30 % (der erfassten Partikel), bevorzugt mindestens 60 %, insbesondere mindestens 70 %, mindestens 80 % der Partikel, besonders bevorzugt alle erfassten Einzelpartikel unter mindestens eine der vorstehend bevorzugten Ausführungsformen der Erfindung in Bezug auf Aspektverhältnis und/oder Ausdehnung.

Das mindestens eine Lösungsmittel ist bevorzugt ausgewählt aus Wasser und aliphatischen oder aromatischen Alkoholen mit mindestens einer OH-Gruppe. Dabei sind die aliphatischen oder aromatischen Alkohole mit Wasser mischbar, wobei darunter die Herstellung einer mindestens 10 Gew.-%-Lösung in Wasser verstanden wird. Die Zusammensetzung weist bevorzugt nur eine flüssige Phase auf.

In einer bevorzugten Ausführungsform der Erfindung ist das mindestens eine Lösungsmittel Wasser und/oder mindestens ein aliphatischer oder aromatischer Alkohol, besonders bevorzugt Wasser und/oder mindestens ein aliphatischer Alkohol mit mindestens einer Hydroxylgruppe.

Bevorzugte aliphatische Alkohole mit mindestens einer Hydroxylgruppe sind C₁-C₈-Alkohole wie Methanol, Ethanol, 1-Propanol, Isopropanol, 1-Butanol, 2-Butanol, Propylenglykol, Glycerin, Diole mit 2 bis 12 Kohlenstoffatomen wie Ethylenglykol, Propylenglykol, Butylenglykol, Pentandiol, Hexamethylenglykol, Octandiol, Neopentylglykol, Cyclohexandimethanol, Diethylenglykol, Triethylenglykol, Dipropylenglykol, oder Polyole mit 2 bis 12 Kohlenstoffatomen, Monoether von Diolen, wie Ethylenglycol oder Propylenglycol, mit C₁-C₆-Alkoholen, wie Isopropoxyethanol.

Es kann auch ein Gemisch von Wasser und mindestens einem vorgenannten Alkohol vorliegen. Bevorzugt handelt es sich um ein Gemisch mit einer flüssigen Phase, d.h. das Wasser und der mindestens eine Alkohol sind miteinander mischbar.

In einer bevorzugten Ausführungsform handelt es sich um Wasser, um mindestens einen der vorgenannten Alkohole oder um ein Gemisch aus Wasser und mindestens einem der vorgenannten Alkohole. Das Verhältnis von Wasser zu Alkohol liegt von 100:0 bis 0:100, bevorzugt von 100:0 bis 60:40 (in Gew.-%), besonders bevorzugt von 100:0 bis 70:30 (Gew.-%), wobei 100:0 bedeutet, dass nur Wasser und 0:100 bedeutet, dass nur Alkohol als Lösungsmittel verwendet wurde.

Bevorzugt ist das Lösungsmittel so gewählt, dass mindestens die mindestens eine Zinkverbindung und der mindestens eine Chelatkomplexbildner darin gelöst vorliegen. Aus einer solchen Lösung können dann die Phosphatpartikel ausgefällt werden.

Die Zusammensetzung umfasst mindestens eine Phosphatverbindung. Bevorzugt handelt es sich um Phosphorsäure und/oder ein Salz der Phosphorsäure. Es kann sich dabei um Phosphat, Dihydrogenphosphat und/oder Hydrogenphosphat handeln. Bevorzugt sind Phosphorsäure sowie Phosphate, Dihydrogenphosphate und/oder Hydrogenphosphate von Alkalimetallen oder Ammoniumionen, bevorzugt von Ammonium, Lithium, Natrium und/oder Kalium. Besonders bevorzugt ist als Phosphatverbindung Na₃PO₄, Na₂HPO₄, NaH₂PO₄, (NH₄)₃PO₄, (NH₄)₂HPO₄, (NH₄)H₂PO₄ und/oder H₃PO₄.

Der Gehalt an der mindestens einen Phosphatverbindung liegt im Fall einer wässrigen Zusammensetzung bevorzugt bei über 0,5 Gew.-% bezogen auf PO₄³⁻. Dabei wird unter einer wässrigen Zusammensetzung eine Zusammensetzung verstanden, mit einem Anteil von mindestens 70 Gew.-% bezogen auf das Lösungsmittel. Bevorzugt liegt der Gehalt an Phosphat bei über 1 Gew.-%, besonders bevorzugt über 2 Gew.-%. Der Gehalt kann davon unabhängig bis zu 40 Gew.-%, bevorzugt bis zu 30 Gew.-% betragen. Besonders bevorzugt ist ein Gehalt zwischen 0,5 Gew.-% und 40 Gew.-%, insbesondere 2 Gew.-% und 30 Gew.-%. Bei nichtwässrigen Zusammensetzungen kann der Gehalt aufgrund geringerer Löslichkeit niedriger sein.

Unter einem Chelatkomplexbildner wird eine Verbindung verstanden, welche mit den mindestens zwei sauerstoffhaltigen Gruppen einen Komplex zu einem Metallion, bevorzugt Zn²⁺-Ion, aufbauen kann. Dabei sind die mindestens zwei sauerstoffhaltigen Gruppen ausgewählt aus der Gruppe umfassend Karbonsäuregruppen, Karbonsäureanhydridgruppen, Ethergruppen, Estergruppen, Ketogruppen und Hydroxylgruppen.

In einer bevorzugten Ausführungsform der Erfindung ist der Chelatkomplexbildner eine organische Säure mit einem pKs-Wert <6. Bevorzugt umfasst der Chelatkomplexbildner mindestens eine Karbonsäuregruppe oder vinyloge Karbonsäuregruppe.

In einer weiteren bevorzugten Ausführungsform der Erfindung ist die zweite sauerstoffhaltige Gruppe über maximal 10 Bindungen mit der ersten sauerstoffhaltigen Gruppe verbunden. Der mindestens eine Chelatkomplexbildner kann noch weitere sauerstoffhaltige Gruppen oder andere Gruppen enthalten.

In einer bevorzugten Ausführungsform der Erfindung ist der mindestens eine Chelatkomplexbildner ausgewählt aus der Gruppe umfassend α-Hydroxycarbonsäuren, Zitronensäure, Äpfelsäure, Weinsäure, Ascorbinsäure, Mandelsäure, Glyoxalsäure, Malonsäure, Milchsäure, Essigsäure, Fumarsäure, Maleinsäure, Gluconsäure, Phthalsäure und Adipinsäure. Er kann als freie Säure oder auch als Anion vorliegen.

Bevorzugt weist der mindestens eine Chelatkomplexbildner eine Molmasse von unter 500 g/mol auf, bevorzugt unter 300 g/mol.

Besonders bevorzugte Chelatkomplexbildner sind Zitronensäure, Äpfelsäure, Weinsäure, Malonsäure, Maleinsäure, Ascorbinsäure und Phthalsäure oder Salze davon, welche einzeln oder in Kombination verwendet werden können.

Die Zusammensetzung umfasst außerdem eine Zinkverbindung. Bevorzugt handelt es sich dabei um ein Zinksalz, besonders bevorzugt ausgewählt aus der Gruppe umfassend Zinknitrat, Zinknitrit, Zinkchlorid, Zinkbromid, Zinkiodid, Zinksulfat, und Zinksalze monomerer oder polymerer organischer Säuren, wie Zinkacetat, Zinkacetylacetonat, Zinkbenzoat, Zinkformiat, Zinklactat, Zinkcitrat, Zinktartrat, Zinkascorbat. Bei der Säure kann es sich auch um den mindestens einen Chelatkomplexbildner handelt. Es können auch Gemische von Zinkverbindungen verwendet werden.

Bezogen auf die molaren Verhältnisse liegt das Verhältnis von Chelatkomplexbildner (CS) und Zinkverbindung bevorzugt bei mindestens 0,1/1, bevorzugt bei mindestens 0,5/1. In einer Ausführungsform der Erfindung liegt das Verhältnis bei 0,1/1 bis 2,0/1, bevorzugt bei 0,33/1 bis 1,6/1 (Verhältnis CS/Zn in mol bezogen auf Zn²⁺), insbesondere bei 0,5/1 bis 1,5/1. Wenn zusätzlich eine weitere Metallverbindung anwesend ist, so wird der molare Anteil dieser Metallverbindung bei der Berechnung des Verhältnisses zum Anteil der Zinkverbindung addiert. Es wird dann das Verhältnis CS/(Zn + Metallverbindung) berechnet, welches die vorgenannten Bedingungen erfüllen muss.

Die Zusammensetzung kann auch noch mindestens eine weitere Metallverbindung enthalten, falls Zink-Metall-Phosphate hergestellt werden sollen. Diese weitere Metallverbindung ist keine Zinkverbindung. Bevorzugt geschieht dies durch Zugabe entsprechender Salze der weiteren Metallverbindungen. Beispiele für weitere Metallionen sind Mangan, Magnesium, Calcium, Strontium, Eisen, Cer, Aluminium, Nickel oder Kobalt. Diese Metallionen können als Salze, wie beispielsweise als Acetate, Nitrate oder Chloride, zugegeben werden.

Das molare Verhältnis zwischen der mindestens einen Zinkverbindung und der mindestens einen weiteren Metallverbindung liegt bevorzugt bei 1/0 bis 1/3 (bezogen auf die jeweiligen Zink- bzw. Metallionen), bevorzugt von 1/0 bis 1/2, wobei 1/0 bedeutet, dass die Zusammensetzung keine weitere Metallverbindung umfasst.

In einer bevorzugten Ausführungsform der Erfindung beträgt das molare Verhältnis der Menge der mindestens einen Zinkverbindung bezogen auf Zn-Ionen und der zugegebenen Menge der mindestens einen Phosphatverbindung bezogen auf P (Zn/P in mol) 0,8 bis 1,8, bevorzugt 1 bis 1,7. Wenn zusätzlich eine weitere Metallverbindung anwesend ist, so wird der molare Anteil dieser Metallverbindung bei der Berechnung des Verhältnisses zum Anteil der Zinkverbindung addiert. Es wird dann das Verhältnis (Zn + Metallverbindung)/P berechnet, welches die vorgenannten Bedingungen erfüllen muss.

In einer bevorzugten Ausführungsform der Erfindung liegt der pH-Wert der Zusammensetzung vor Beginn des Verfahrens bei kleiner gleich 3,5, bevorzugt bei kleiner gleich 3. Dies gilt insbesondere für Zusammensetzungen mit einem Anteil an Wasser am Lösungsmittel von mindestens 70 Gew.-%.

In einer bevorzugten Ausführungsform der Erfindung beträgt die Temperatur der Zusammensetzung bei der Bildung der Partikel weniger als 50 °C, bevorzugt weniger als 40 °C, besonders bevorzugt weniger als 30 °C. Die Temperatur kann dabei zwischen 5 °C und 50 °C, bevorzugt zwischen 10 °C und 40 °C betragen, besonders bevorzugt zwischen 15 °C und 30 °C. Durch die niedrige Temperatur wird die Bildung von kristallinen Partikeln begünstigt.

Zur Bildung der Partikel kann die Zusammensetzung durchmischt, z. B. gerührt werden.

Die Bildung der Partikel kann durch Dauer des Ausfällprozesses beeinflusst werden. Es kann erforderlich sein die Partikel erst nach mindestens 30 Minuten, bevorzugt mindestens 1 Stunde abzutrennen. Abhängig von den Bedingungen dauert die Bildung der Partikel mindestens 10 Stunden, insbesondere mindestens 15 Stunden, besonders bevorzugt mindestens 20 Stunden. Es kann erforderlich sein, die Zusammensetzung dabei zu durchmischen, z. B. zu rühren.

Der Gehalt an Zinkverbindung liegt im Fall einer wässrigen Zusammensetzung bevorzugt bei über 0,5 Gew.-% bezogen auf Zn²⁺. Dabei wird unter einer wässrigen Zusammensetzung eine Zusammensetzung verstanden, mit einem Anteil von mindestens 70 Gew.-% bezogen auf das Lösungsmittel. Bevorzugt liegt der Gehalt an Zn bei über 1 Gew.-%, besonders bevorzugt über 2 Gew.-%. Der Gehalt kann davon unabhängig bis zu 40 Gew.-%, bevorzugt bis zu 30 Gew.-% betragen. Besonders bevorzugt ist ein Gehalt zwischen 0,5 Gew.-% und 40 Gew.-%, insbesondere 2 Gew.-% und 30 Gew.-%.

Das Verfahren kann außerdem noch den Schritt enthalten, dass vor oder während der Bildung der Partikel der Feststoffgehalt der Zusammensetzung auf einen bestimmten Wert eingestellt wird, z. B. 0,5 bis 20 Gew.-%. Dies kann beispielsweise durch Zugabe von Lösungsmittel geschehen. Bevorzugt wird mindestens ein Lösungsmittel zugegeben, besonders bevorzugt Wasser.

In einem nächsten Schritt können die erhaltenen Partikel optional gewaschen werden. Dies kann beispielsweise durch einmaliges oder mehrfaches Zentrifugieren, entfernen des Überstands und Zugabe von Wasser geschehen.

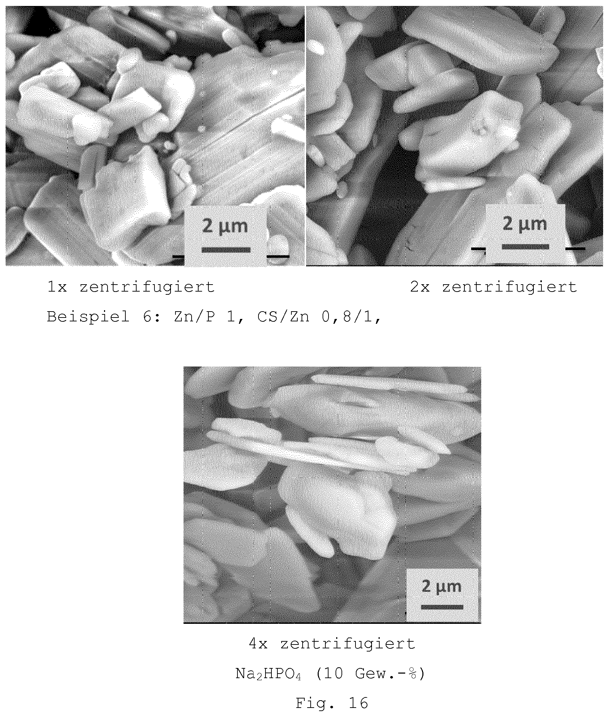

Unter den angegebenen Bedingungen werden im Rahmen der Synthese sowohl Partikel mit orthorhombischer Kristallstruktur, als auch eine Reihe weiterer Nebenprodukte (u.a. Reste der Zinkverbindung, der Phosphatverbindung, lösliche Zink-Carboxylat-Komplexe etc.) erhalten. Im anschließenden Zentrifugations- und Waschprozess werden die wasserlöslichen Nebenbestandteile von den wasserunlöslichen Partikeln bevorzugt mit orthorhombischer Kristallstruktur abgetrennt. Die Abtrennung der wasserlöslichen Nebenbestandteile gelingt, wie die Ergebnisse der Elementaranalyse zeigen, bereits nach dem ersten Zentrifugationsschritt praktisch vollständig. Das Aspektverhältnis der anisotropen Partikel ist dabei von dem Chelatkomplexbildner/Zn-Verhältnis abhängig. Der Zentrifugations- und Waschprozess ändert die einmal gebildete anisotrope Partikelform und das Aspektverhältnis der anisotropen Partikel nicht mehr (siehe auch Figur 16).

Die Partikel können danach getrocknet werden, bevorzugt bei Temperaturen von unter 150 °C, bevorzugt unter 100 °C, ganz besonders bevorzugt unter 50 °C, insbesondere unter 40 °C oder unter 35 °C. Dabei kann auch Vakuum verwendet werden.

Es findet bevorzugt keine Kalzinierung statt.

Das erfindungsgemäße Verfahren erlaubt die Herstellung der Partikel mit günstigen Ausgangsstoffen und unter einfachen Bedingungen.

In einer weiteren Ausführungsform der Erfindung ist die erfindungsgemäße Zusammensetzung frei von Beschleunigern, wie Nitriten, Chloraten, Bromaten. Diese werden insbesondere in Zusammensetzungen zum Erzeugen von Phosphatschichten auf Oberflächen verwendet.

Die erfindungsgemäße Zusammensetzung wird auf keine Oberfläche aufgetragen. Die Partikel bilden sich in der Zusammensetzung selbst.

In einer Ausführungsform der Erfindung wird die Zusammensetzung aus mindestens zwei Zusammensetzungen erhalten. Dazu werden eine Zusammensetzung umfassend mindestens eine Phosphatverbindung und eine weitere Zusammensetzung umfassend mindestens eine Zinkverbindung und mindestens einen Chelatkomplexbildner mit mindestens zwei sauerstoffhaltigen Gruppen hergestellt. Danach wird die Zusammensetzung mit der mindestens einen Phosphatverbindung zu der Zusammensetzung umfassend die mindestens eine Zinkverbindung und mindestens einen Chelatkomplexbildner gegeben. Dabei bildet sich die erfindungsgemäße Zusammensetzung.

Die Zugabe kann auf einmal oder tropfenweise erfolgen. In einer weiteren Ausführungsform der Erfindung beträgt die Temperatur aller Zusammensetzungen des Verfahrens bei Zugabe unter 50 °C, bevorzugt 10 °C bis 40 °C.

Die Zusammensetzung umfassend mindestens eine Phosphatverbindung ist bevorzugt eine Lösung der mindestens einen Phosphatverbindung. Bevorzugt handelt es sich um Phosphorsäure und/oder ein Alkalisalz der Phosphorsäure. Es kann sich dabei um Phosphat, Dihydrogenphosphat und/oder Hydrogenphosphat handeln. Bevorzugt sind Phosphorsäure sowie Phosphate, Dihydrogenphosphate und/oder Hydrogenphosphate von Lithium, Natrium und/oder Kalium. Besonders bevorzugt ist als Phosphatverbindung Na₃PO₄, Na₂HPO₄, NaH₂PO₄ und/oder H₃PO₄.

Der Gehalt an der mindestens einen Phosphatverbindung in dieser Zusammensetzung bezogen auf PO₄³⁻ liegt dabei bevorzugt zwischen 0,5 und 90 Gew.-%. Im Fall einer wässrigen Zusammensetzung liegt der Gehalt bevorzugt zwischen 1 Gew.-% und 90 Gew.-%.

Der Gehalt an der mindestens einen Zinkverbindung bezogen auf Zn²⁺ in der anderen Zusammensetzung liegt bevorzugt zwischen 0,5 Gew.-% und 30 Gew.-%, bevorzugt zwischen 1 Gew.-% und 25 Gew.-% oder zwischen 1 Gew.-% und 15 Gew.-%.

Falls noch andere Metallverbindungen hinzugegeben werden, so werden diese in der Zusammensetzung umfassend die mindestens eine Zinkverbindung gelöst. Deren Anteile bezogen auf die jeweiligen Metallionen zählen als Teil der Anteile an der Zinkverbindung.

Die molaren Verhältnisse zwischen Zn und dem Chelatkomplexbildner entsprechen den Verhältnissen in der erfindungsgemäßen Zusammensetzung.

Die hergestellten Zinkphosphat-Partikel und Zink-Metall-Mischphosphat-Partikel eignen sich für alle üblichen Einsatzgebiete für Zinkphosphate oder Zink-Metall-Mischphosphate. Sie können beispielsweise als Korrosionsschutzpigmente eingesetzt werden, beispielsweise in Lacken und Farben.

Die hergestellten Partikel zeichnen sich dadurch aus, dass sie vollständig redispergierbar sind und daher gerade in Lacken und Farben einsetzbar sind.

Anisotrope, bzw. plättchenförmige, Partikel können sich insbesondere in Beschichtungszusammensetzungen parallel zur beschichteten Oberfläche ausrichten. Dadurch können solche Beschichtungen eine hohe Diffusionsbarriere aufweisen. Dies ist bei kugelförmigen Teilchen aus dem Stand der Technik nicht möglich. Die auf der Oberfläche erzeugten Beschichtungen erfordern eine Behandlung der Oberfläche und sind häufig nur für bestimmte Oberflächen geeignet. So müssen sie häufig erhitzt werden, um die Phosphatschicht zu bilden oder enthalten aggressive Inhaltsstoffe (Oxidationsmittel, Säuren, etc.).

Die hergestellten Partikel können auch in ein Verbundmaterial, welches ein Polymer umfasst, eingebracht werden. Sie können insbesondere zur Herstellung von Polymerkompositen in alle gängigen Polymere eingebracht werden, die durch Polykondensation, Polyaddition, radikalische Polymerisation, ionische Polymerisation und Copolymerisation hergestellt wurden. Beispiele für derartige Polymere sind Polyurethane, Polycarbonat, Polyamid, Polyacrylate, Polyacrylsäure, Polymethylmethacrylat (PMMA), Polyester, Polyolefine, Kautschuk, Polysiloxane, EthylenVinylalkohol-Copolymer (EVOH), Polylactide, Polystyrol, Polyethylenoxid (PEO), Polyphenylenoxid (PPO), Polyacrylnitril (PAN), Polyepoxide, Polyamidimide, Polyimide, Epoxy-PhenolHarze, Epoxy-Phenoxy-Harze.

Das Einbringen in Polymere kann mittels gängiger Techniken wie bspw. Extrusion, Knetverfahren, Rotor-Stator-Verfahren (Dispermat, Ultra-Turrax, etc.), Mahlverfahren (Kugelmühle etc.) oder Strahldispergierung erfolgen und hängt von der Viskosität der Polymeren ab.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

So umfassen beispielsweise Bereichsangaben stets alle - nicht genannten - Zwischenwerte und alle denkbaren Teilintervalle.

Die Figuren zeigen Ergebnisse und Messungen zu den Ausführungsbeispielen. Alle Verhältnisangaben in den Figurenbeschreibungen sind molare Verhältnisse. Im Einzelnen zeigt:

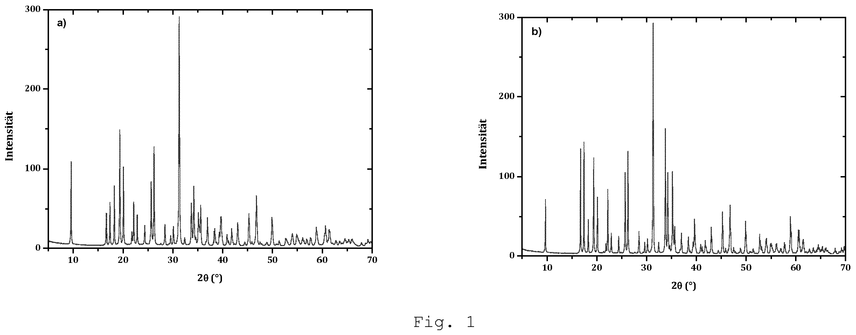

- Fig. 1: a): Diffraktogramm von Vergleichsbeispiel 3: Zn/P = 1,5 ohne Zitronensäure als Chelatkomplexbildner (CS) CS/Zn 0/1, H₃PO₄ (85 Gew. %), 4x zentrifugiert, Diffraktogramm b): Beispiel 2: Zn/P = 1,5 mit Zitronensäure als Chelatkomplexbildner (CS) CS/Zn 1/1, H₃PO₄ (85 Gew.-%), 4x zentrifugiert (XRD-Spektrum Hopeit Zn₃(PO₄)₂ * ₄H₂O);

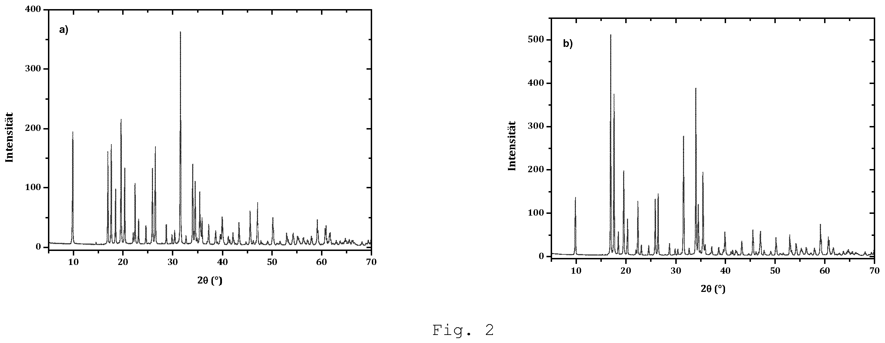

- Fig. 2: Abhängigkeit von Zentrifugationsbedingungen, Diffraktogramme a) Beispiel 2: Zn/P = 1,5; CS/Zn 1/1, H₃PO₄ (85 Gew.-%), 1x zentrifugiert, Diffraktogramm; b) Beispiel 2: Zn/P = 1,5 CS/Zn 1/1, H₃PO₄ (85 Gew.-%), 2x zentrifugiert, (XRD-Spektrum Hopeit Zn₃(PO₄)₂ * 4 H₂O);

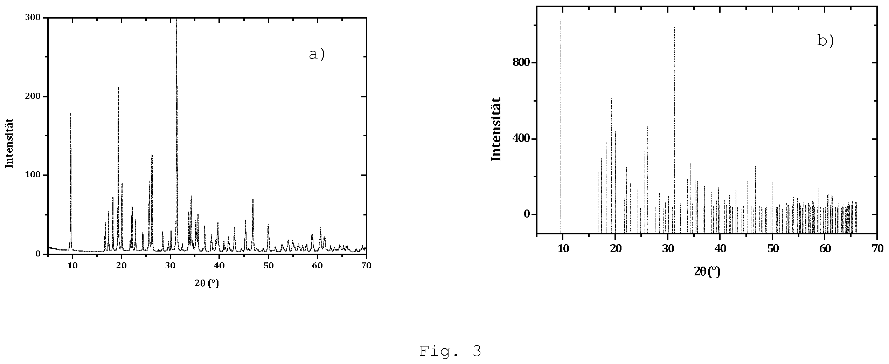

- Fig. 3: a) Diffraktogramm von Beispiel 2a: CS/Zn 1/1, H₃PO₄ (30 Gew.-%), 4x zentrifugiert; Partikelgröße: groß: 2-3 µm; klein 0,2-0,4 µm (XRD-Spektrum Hopeit Zn₃(PO₄)₂ * 4 H₂O); b) Vergleichsdiffraktogramm für Hopeit

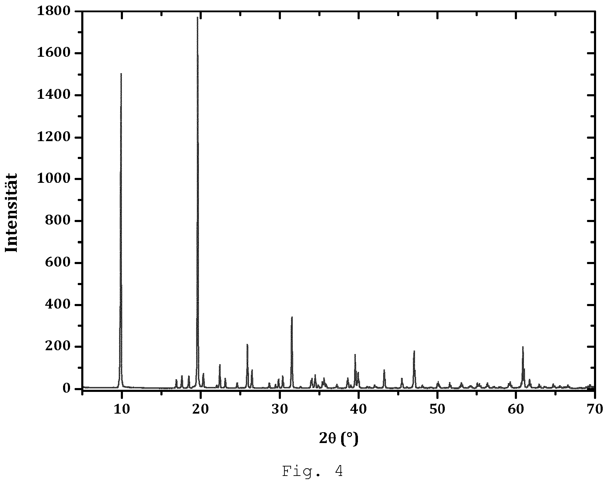

- Fig. 4: Diffraktogramm von Beispiel 4: Zn/P = 1, CS/Zn = 0/1, 4x zentrifugiert;

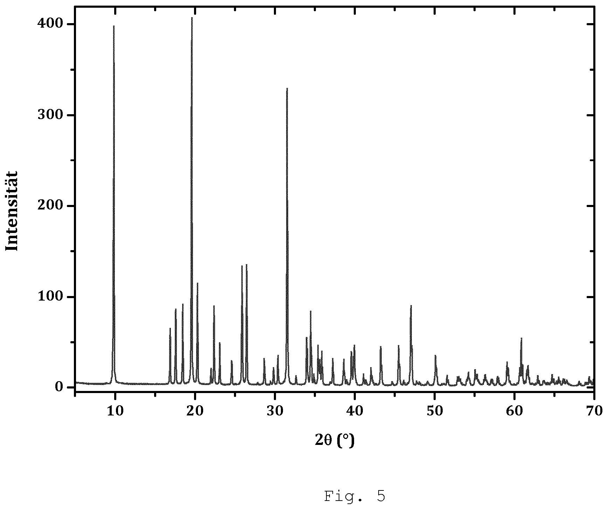

- Fig. 5: Diffraktogramm von Beispiel 5: Zn/P = 1, CS/Zn = 0,1/1, 4x zentrifugiert;

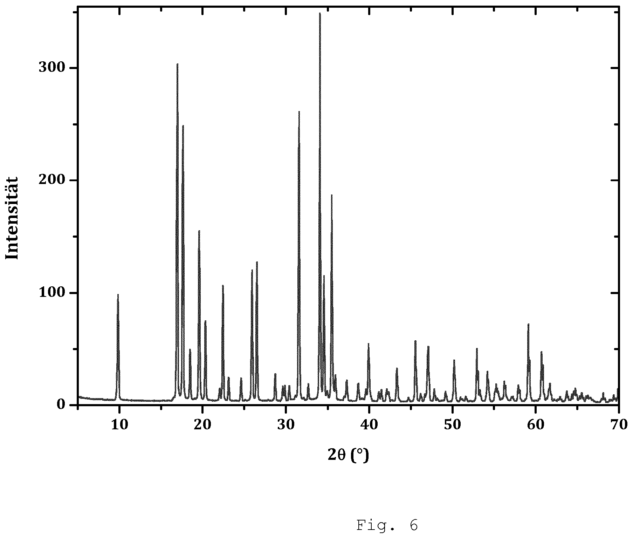

- Fig. 6: Diffraktogramm von Beispiel 6: Zn/P = 1, CS/Zn = 0,8/1, 1x zentrifugiert;

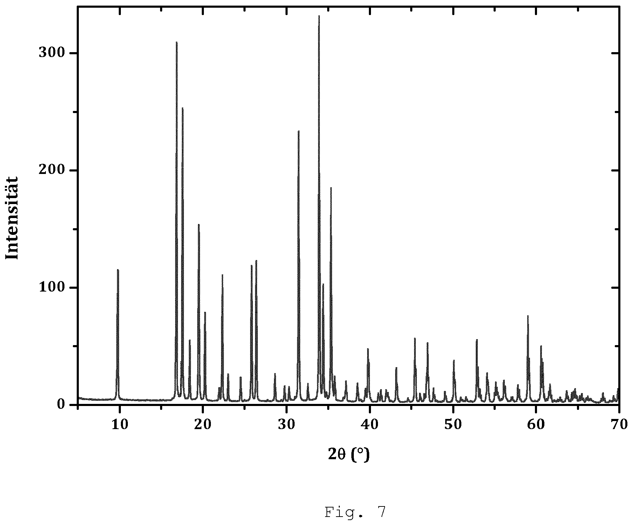

- Fig. 7: Diffraktogramm von Beispiel 6: Zn/P = 1, CS/Zn = 0,8/1, 2x zentrifugiert;

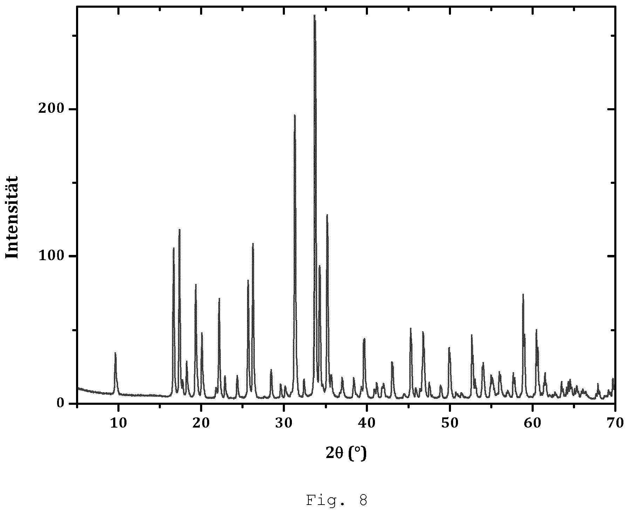

- Fig. 8: Diffraktogramm von Beispiel 6: Zn/P = 1, CS/Zn = 0,8/1, 4x zentrifugiert;
- Fig. 9: Schematische Darstellung des erfindungsgemäßen Verfahrens;
- Fig. 10: REM-Aufnahmen der erhaltenen Partikel von Beispiel 3, 3a, 2 und 2a; Einfluss ohne Chelatkomplexbildner (unförmige Partikel) und mit Chelatkomplexbildner (plättchenförmige Partikel)
- Fig. 11: REM Aufnahmen der erhaltenen Partikel mit dem Verhältnis Zn/P 1,5 sowie CS/Zn 0,66/1 und 1/1 in verschiedenen Auflösungen mit jeweils unterschiedlich konzentrierter Phosphorsäure H₃PO₄ (oben: 85 Gew.-% Beispiele 1b, 2; unten: 30 Gew.-% Beispiel 2a);
- Fig. 12: REM Aufnahmen verschiedener Verhältnisse von CS/Zn und Zn/P bei Veränderung der Konzentration der Phosphorsäure (Zn-Verbindung Zn-Acetat mit Zitronensäure als CS) ;
- Fig. 13: REM Aufnahmen der erhaltenen Partikel mit CS/Zn 0/1 und CS/Zn 1/1 bei Zn/P 1,5, H₃PO₄ (85 Gew.-%) bei tropfenweiser Zugabe der Phosphatlösung in die Zinkacetat/CS-Lösung (CS: Zitronensäure);
- Fig. 14: REM Aufnahmen der erhaltenen Partikel mit CS/Zn 0/1 und CS/Zn 1/1 bei Zn/P 1,5 H₃PO₄ (85 Gew.-%) bei einmaliger Zugabe der Phosphatlösung in die Zinkacetat/CS-Lösung (Zitronensäure); Vergleich zu Fig. 13, Partikelform unabhängig von Zugabeweise;
- Fig. 15: REM Aufnahmen der erhaltenen Partikel von Beispiel 4, 5 und 6 mit Zn-Nitrat und Na₂HPO₄ als Ausgangsverbindungen; Zn/P 1, Na₂HPO₄ (10 Gew.-%), 4x zentrifugiert, zunehmendes CS/Zn-Verhältnis;
- Fig. 16: REM Aufnahmen von Beispiel 6: Zn/P 1, CS/Zn 0,8/1, Na₂HPO₄ (10 Gew.-%), die Partikel wurden unterschiedlich oft zentrifugiert;
- Fig. 17: REM Aufnahmen zu Versuchen zum Einfluss verschiedener Typen von Chelatkomplexbildnern; Zn/P 1, CS/Zn 0,8/1, Na₂HPO₄ (10 Gew.-%): Morphologie in Abhängigkeit vom Typ Komplexbildner, Äpfelsäure entspricht Beispiel 17;

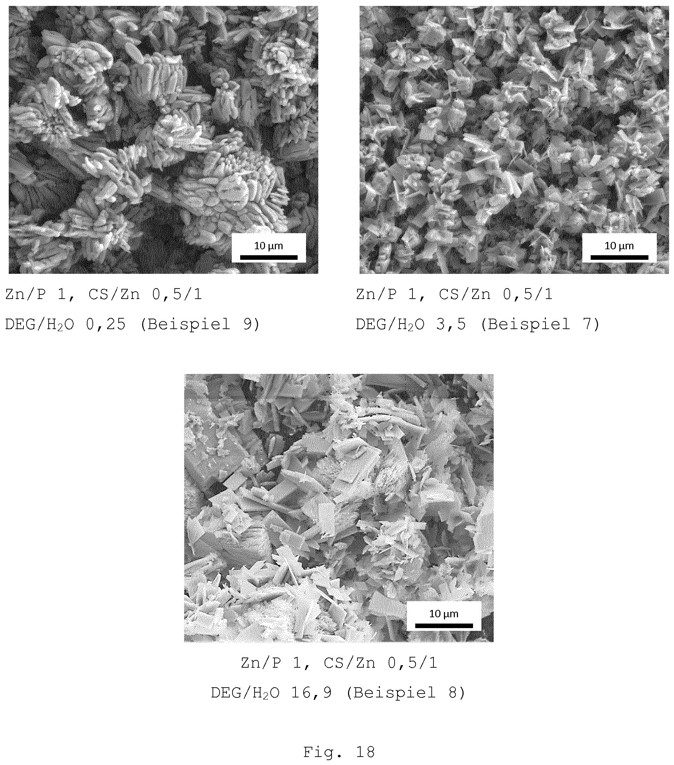

- Fig. 18: REM Aufnahmen von Beispiel 7, 8 und 9; Zn/P 1, CS/Zn 0,5/1, Na₂HPO₄ (10 Gew.-%), DEG/H₂O 0,25 bis 16,9 (in Gew.-%), Zugabe der Phosphatlösung in Zinknitrat/CS-Lösung;
- Fig. 19: REM-Aufnahmen von Zusammensetzungen Zn/P 1,5 mit CS/Zn 0,5/1, Na₂HPO₄ (1 Gew.-%), in DEG/H₂O 1/0, einmalige Zugabe der Phosphatlösung in Zinknitrat/CS-Lösung;
- Fig. 20: Manganphosphat-Partikel aus Manganacetat-tetra-hydrat und 85 %-iger H₃PO₄ (Mn/P = 1,5) ohne Chelatkomplexbildner (CS), CS/Mn = 0/1, (Beispiel 18: Vergleichsbeispiel ohne Chelatkomplexbildner);
- Fig. 21: Manganphosphat-Partikel aus Manganacetat-tetra-hydrat und 85 %-iger H₃PO₄ (Mn/P = 1,5) mit Zitronensäure als Chelatkomplexbildner (CS), CS/Mn = 1/1, (Beispiel 20);
- Fig. 22: Lichtmikrokopische Aufnahmen von Kompositen aus Epoxidharzmatrix mit 2 Gew.-% Zinkphosphat-Partikeln aus Beispiel 2 (Aufsicht) beschichtet auf Glas, a) thermisch härtendes Epoxidharz-Zinkphosphat-Komposit (Beispiel 21), b) UV-härtendes Epoxidharz-Zinkphosphat-Komposit (Beispiel 22);
- Fig. 23: Einfluss der Partikel aus Beispiel 2 auf das Korrosionsverhalten einer Normalstahloberfläche, Korrosionsstrom I_{corr} aus Potentialmessungen und Durchtrittswiderstand aus elektrochemischen Impedanzmessungen, Stahl: ST1203, Medium: 3,5 % NaCl in Wasser, T = 23 °C, 0,75 Gew.-% erfindungsgemäße Partikel aus Beispiel 2 dispergiert im Medium; Die Säulen bedeuten: 1. Säule kein ZnPO₄, 2. Säule mit ZnPO₄, CS/Zn 0,1/1 (Beispiel 5); 3. Säule mit ZnPO₄ CS/Zn 0,8/1 (Beispiel 6));
- Fig. 24: Schematische Darstellung der Dimensionen eines plättchenförmigen Partikels.

Tabelle 1 zeigt die Elementaranalyse (CHNS) von Beispiel 2 (Zn-Acetat und H₃PO₄ als Ausgangsverbindungen; Zn/P 1,5, CS/Zn 1/1, H₃PO₄ (85 Gew.-%).

Tabelle 2 zeigt die Elementaranalyse (CHNS) von Beispiel 6 (Zn-Nitrat und Na₂HPO₄ als Ausgangsverbindungen; Zn/P 1, CS/Zn 0,8/1, Na₂HPO₄ (10 Gew.-%).

Tabelle 3 zeigt Dimensionen und Aspektverhältnisse (AR) für erfindungsgemäße Zinkphosphat-Partikel hergestellt in Gegenwart unterschiedlicher Chelatkomplexbildner (CS). Die Dimensionen der Partikel wurden mittels REM ermittelt. Zur Bilderzeugung wurde das Signal der Sekundärelektronen herangezogen (Beschleunigungsspannung 10 kV, Druck 100 Pa). Die gezeigten Aufnahmen stellen einen Reliefkontrast dar. Zur Ermittlung der Aspektverhältnisse von Einzelpartikeln wurde jeweils die Länge der längeren Längsachse (L) ins Verhältnis zur jeweiligen Dicke (D) gesetzt (Figur 24). Die mittleren Aspektverhältnisse und die zugehörigen Standardabweichungen wurden aus 20 Aspektverhältnissen von Einzelpartikeln ermittelt. Das angegebene maximale Aspektverhältnis ist das größte der im Rahmen der Bestimmung des Aspektverhältnisses eines Einzelpartikels ermittelten Aspektverhätnisse.

Die Figuren zeigen einige besondere Vorteile des erfindungsgemäßen Verfahrens.

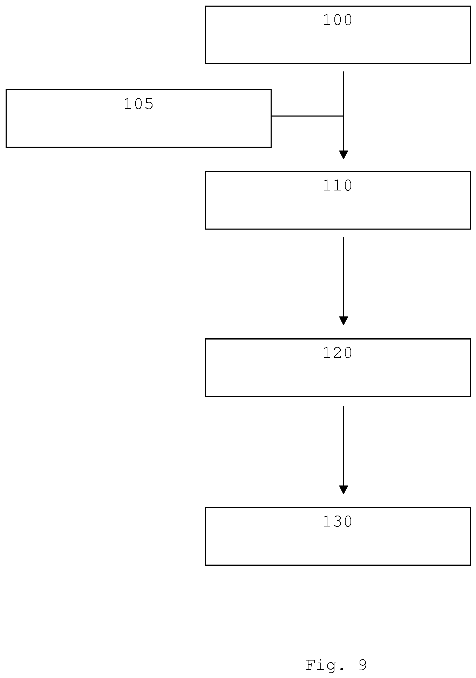

In Figur 9 ist eine Ausführungsform des erfindungsgemäßen Verfahrens dargestellt. Zuerst wird eine Zusammensetzung umfassend mindestens eine Zinkverbindung und mindestens einen Chelatkomplexbildner hergestellt (100). Außerdem wir eine Zusammensetzung umfassend mindestens eine Phosphatverbindung (105) gezeigt. In einem nächsten Schritt (110) wird die Zusammensetzung (105) zu der Zusammensetzung (100) gegeben. Dabei bilden sich die ersten Nuclei für die erfindungsgemäßen Partikel. Optional kann es erforderlich sein, zur Kristallisation die Zusammensetzung 1 Stunde bis 72 Stunden zu rühren und/oder ruhen zu lassen (120), bevorzugt mindestens 20 Stunden. Danach werden die Partikel abgetrennt, optional isoliert (130) Dies kann durch Sedimentation und/oder Zentrifugation, welche auch mehrfach, z. B. 1- bis 5-fach durchgeführt wird, erfolgen. Die erhaltenen Partikel können auch getrocknet werden.

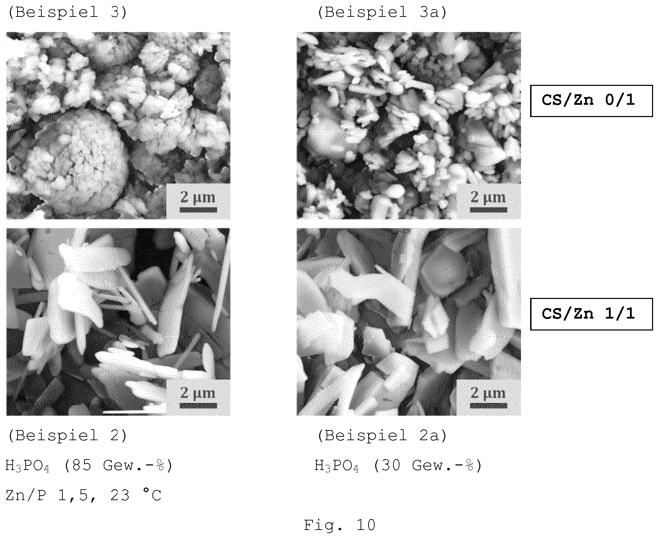

In Figur 10 ist der Einfluss des Chelatkomplexbildners deutlich zu erkennen. Die Plättchen bilden sich nur bei Anwesenheit des Chelatkomplexbildners.

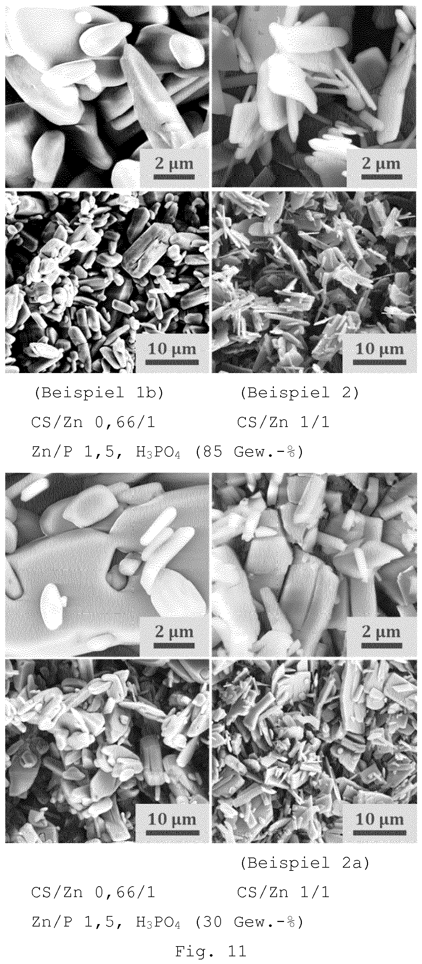

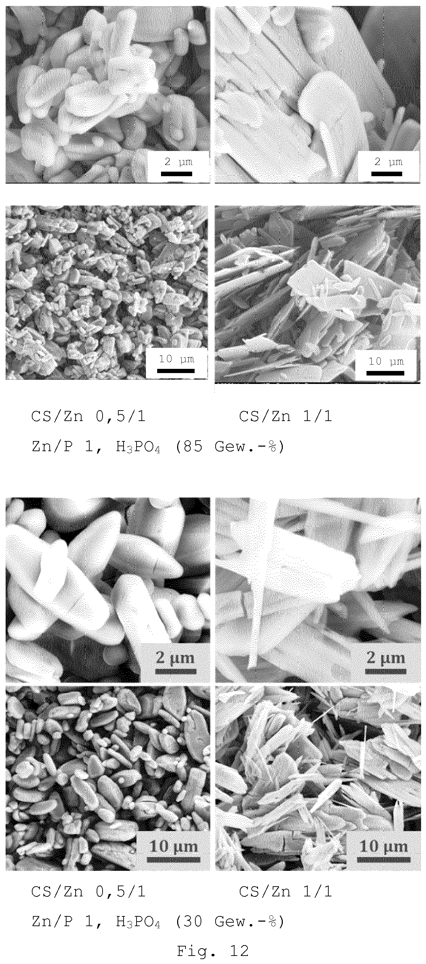

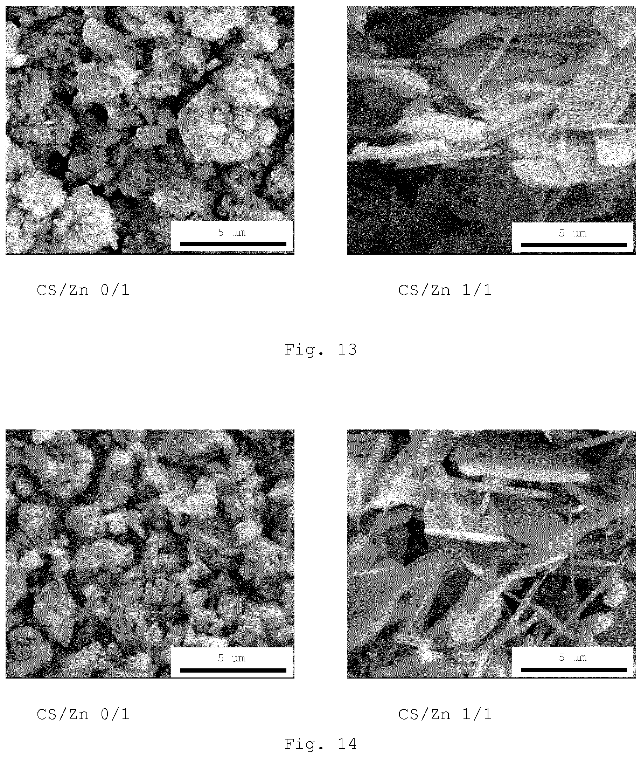

Die Figuren 11, 12, 13 und 14 zeigen ebenfalls den Einfluss des Chelatkomplexbildners.

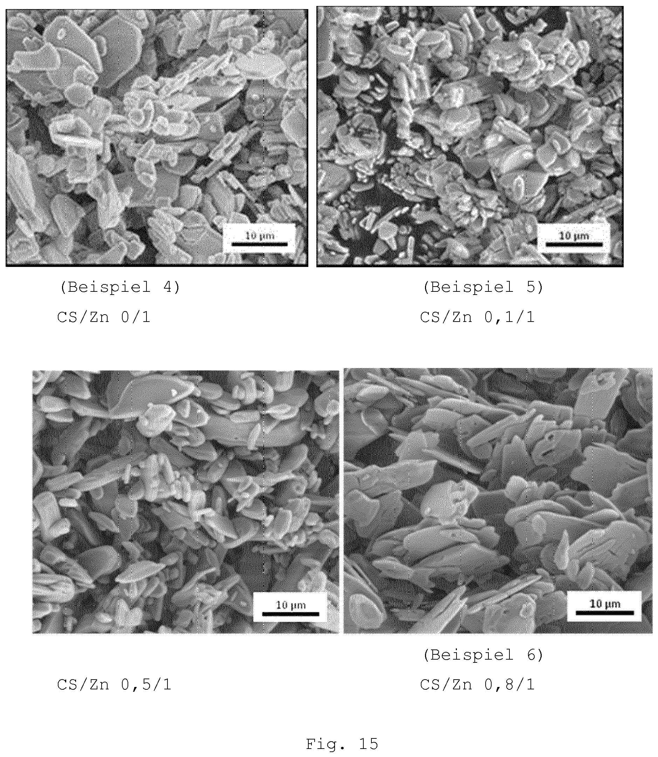

Figur 15 zeigt, wie sich das Aspektverhältnis der Partikel steuern lässt. Mit zunehmendem Anteil an Chelatkomplexbildner nimmt das Aspektverhältnis zu.

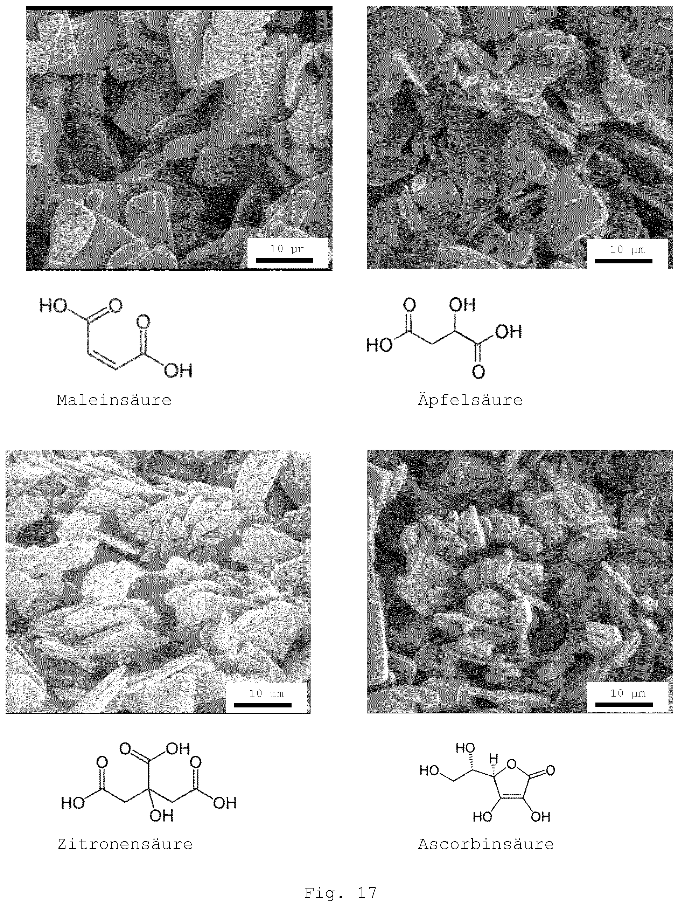

Figur 17 zeigt, dass auch mit anderen Chelatkomplexbildnern plättchenförmige Partikel hergestellt werden können.

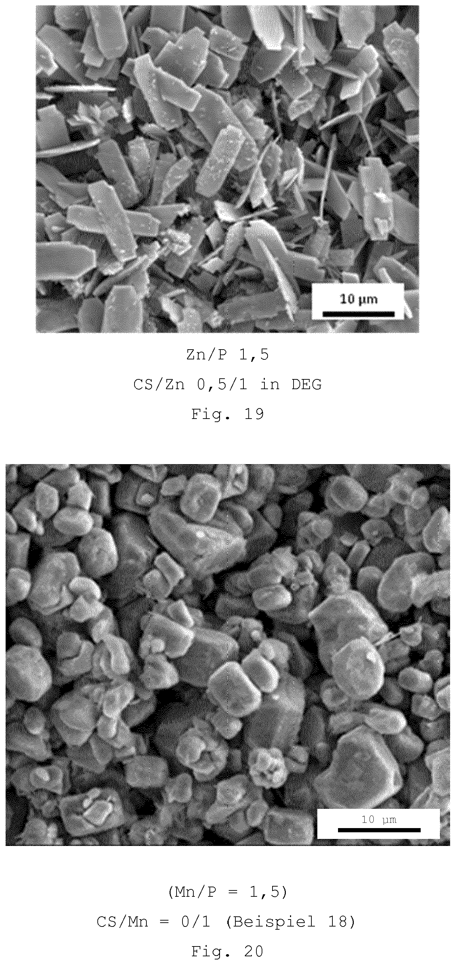

Es ist auch möglich, die Partikel aus nicht-wässrigen Lösungen zu erhalten, wie es in Figur 19 gezeigt wird.

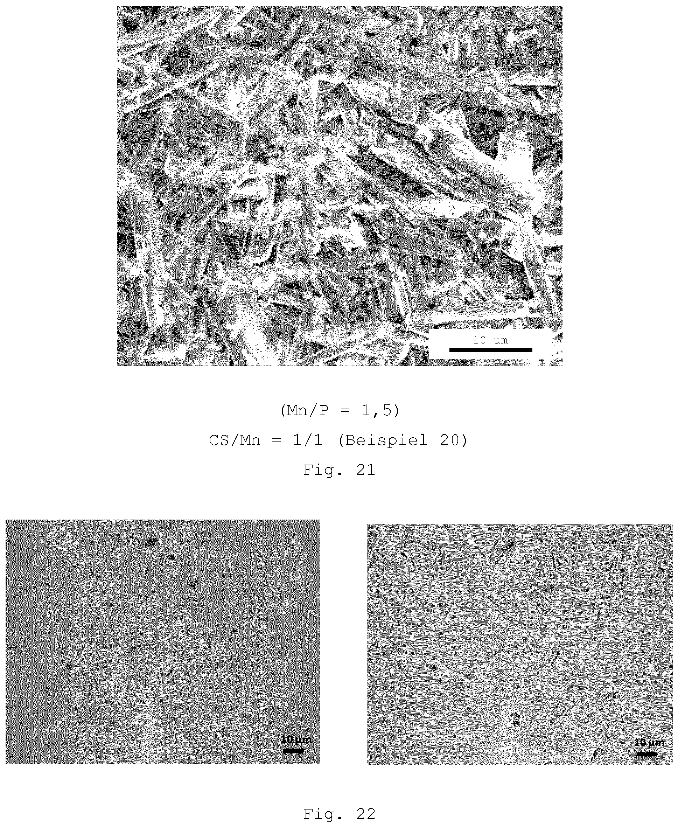

Mit Mangan (Beispiele 18 bis 20) werden keine plättchenförmigen Partikel erhalten. Es bilden sich auch keine orthorhombischen Strukturen. Die erhaltenen Partikel sind entweder rund (Figur 20) oder nadelförmig (Figur 21).

XRD-Messungen wurden mittels Pulver-Diffraktometer D8-Advance (Bruker-AXS) durchgeführt (40 kV; 30 mA; CuKα = 1,54178 Ä, Divergenzblende: 0,1°, Detektor: Lynxeye, Detektorspalt 3 mm, Meßbereich :2,8°-150° (2θ), Schrittgröße: 0,02° (2θ), Meßzeit/Schritt: 1 s).

Figur 23 zeigt die Verbesserung des Korrosionsschutzes durch die erfindungsgemäßen Partikel.

### Ausführungsbeispiele

### Beispiel 1:

### Zinkphosphat-Partikel aus Zinkacetat-di-hydrat und 85 %-iger H₃PO₄ (Zn/P = 1,5) mit Zitronensäure als Chelatkomplexbildner (CS) CS/Zn = 0,166/1

3,29 g (15 mmol) Zinkacetat-di-hydrat wurde in 9,87 g de-ionisiertem Wasser gelöst (25 Gew.-%) und 0,480 g (2,5 mmol) Zitronensäure, gelöst in 1,44 g de-ionisiertem Wasser (25 Gew.- %), unter Rühren (ca. 500 U/min) zugegeben. Anschließend wurde die Mischung für 1 h weiter gerührt. Nachfolgend wurde 1,15 g H₃PO₄ (85 %) bei 23 °C unter Rühren (ca. 750 U/min) kontinuierlich tropfenweise zugegeben und die erhaltene Mischung für 24 h bei 600 U/min weiter gerührt. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 1a:

### Zinkphosphat-Partikel aus Zinkacetat-di-hydrat und 85 %-iger H₃PO₄ (Zn/P = 1,5) mit Zitronensäure als Chelatkomplexbildner (CS) CS/Zn = 0,33/1

3,29 g (15 mmol) Zinkacetat-di-hydrat wurde in 9,87 g de-ionisiertem Wasser gelöst (25 Gew.-%) und 0,95 g (4,95 mmol) Zitronensäure, gelöst in 2,85 g de-ionisiertem Wasser (25 Gew.- %), unter Rühren (ca. 500 U/min) zugegeben. Anschließend wurde für 1 h weiter gerührt. Nachfolgend wurde 1,15 g H₃PO₄ (85 %) bei 23 °C unter Rühren (ca. 750 U/min) kontinuierlich tropfenweise zugegeben. Erst nach 24 h bildete sich das Zinkphosphat-Präzipitat, welches noch weitere 24 h bei 600 U/min gerührt wurde. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 1b:

### Zinkphosphat-Partikel aus Zinkacetat-di-hydrat und 85 %-iger H₃PO₄ (Zn/P = 1,5) mit Zitronensäure als Chelatkomplexbildner (CS) CS/Zn = 0,66/1

3,29 g (15 mmol) Zinkacetat-di-hydrat wurde in 9,87 g de-ionisiertem Wasser gelöst (25 Gew.-%) und 1,90 g (9,9 mmol) Zitronensäure, gelöst in 5,71 g de-ionisiertem Wasser (25 Gew.- %), unter Rühren (ca. 500 U/min) zugegeben. Anschließend wurde für 1 h weiter gerührt. Nachfolgend wurde 1,15 g H₃PO₄ (85 %) bei Raumtemperatur unter Rühren (ca. 750 U/min) kontinuierlich tropfenweise zugegeben. Erst nach 24 h bildete sich das Zinkphosphat-Präzipitat, welches noch weitere 24 h bei 600 U/min gerührt wurde. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 2:

### Zinkphosphat-Partikel aus Zinkacetat-di-hydrat und 85 %-iger H₃PO₄ (Zn/P = 1,5) mit Zitronensäure als Chelatkomplexbildner (CS), CS/Zn = 1/1

3,29 g (15 mmol) Zinkacetat-di-hydrat wurde in 9,87 g de-ionisiertem Wasser gelöst (25 Gew.-%) und 2,88 g (15 mmol) Zitronensäure, gelöst in 8,64 g de-ionisiertem Wasser (25 Gew.-%), unter Rühren (ca. 500 U/min) zugegeben. Anschließend wurde für 1 h weiter gerührt. Nachfolgend wurde 1,15 g H₃PO₄ (85 %) bei 23 °C unter Rühren (ca. 750 U/min) kontinuierlich tropfenweise zugegeben. Erst nach 24 h bildete sich das Zinkphosphat-Präzipitat, welches noch weitere 24 h bei 600 U/min gerührt wurde. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 2a:

### Zinkphosphat-Partikel aus Zinkacetat-di-hydrat und 30 %-iger H₃PO₄ (Zn/P = 1,5) mit Zitronensäure als Chelatkomplexbildner (CS), CS/Zn = 1/1

3,29 g (15 mmol) Zinkacetat-di-hydrat wurde in 9,87 g de-ionisiertem Wasser gelöst (25 Gew.-%) und 2,88 g (15 mmol) Zitronensäure, gelöst in 8,64 g de-ionisiertem Wasser (25 Gew.-%), unter Rühren (ca. 500 U/min) zugegeben. Anschließend wurde für 1 h weiter gerührt. Nachfolgend wurde 3,27 g H₃PO₄ (30 %) unter Rühren (ca. 750 U/min) bei 23 °C kontinuierlich tropfenweise zugegeben. Erst nach 24 h bildete sich das Zinkphosphat-Präzipitat, welches noch weitere 24 h bei 600 U/min gerührt wurde. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 3 (Vergleichsbeispiel ohne Chelatkomplexbildner):

### Zinkphosphat-Partikel aus Zinkacetat-di-hydrat und 85 %-iger H₃PO₄ (Zn/P = 1,5) ohne Chelatkomplexbildner (CS), CS/Zn = 0/1

3,29 g (15 mmol) Zinkacetat-di-hydrat wurde in 9,87 g de-ionisiertem Wasser gelöst (25 Gew.-%) und 1,15 g H₃PO₄ (85 %) unter Rühren (ca. 750 U/min) kontinuierlich tropfenweise zugegeben (23 °C). Es bildete sich das Zinkphosphat-Präzipitat und die erhaltene Mischung wurde für 24 h bei 600 U/min weiter gerührt. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 3a (Vergleichsbeispiel ohne Chelatkomplexbildner):

### Zinkphosphat-Partikel aus Zinkacetat-di-hydrat und 30 %-iger H₃PO₄ (Zn/P = 1,5) ohne Chelatkomplexbildner (CS), CS/Zn = 0/1

3,29 g (15 mmol) Zinkacetat-di-hydrat wurde in 9,87 g de-ionisiertem Wasser gelöst (25 Gew.-%) und 3,27 g H₃PO₄ (30 %) unter Rühren (ca. 750 U/min) kontinuierlich tropfenweise zugegeben (Raumtemperatur). Es bildet sich das Zinkphosphat Präzipitat und die Mischung wurde für 24 h bei 600 U/min weiter gerührt. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 4 (Vergleichsbeispiel ohne Chelatkomplexbildner):

### Zinkphosphat-Partikel aus Zinknitrat-hexahydrat und Na₂HPO₄ (Zn/P = 1) ohne Chelatkomplexbildner (CS), CS/Zn = 0/1

2,97 g Zinknitrat-hexahydrat (0,01 mol) wurden in 8,91 g de-ionisiertem Wasser gelöst und für 1 h gerührt. Parallel wurden 1,42 g Na₂HPO₄ (0,01 mol) in 12,8 g de-ionisiertem Wasser gelöst und in die Zinknitrat-hexahydrat Lösung eingetropft und für 24 h weitergerührt. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 5:

### Zinkphosphat-Partikel aus Zinknitrat-hexahydrat und Na₂HPO₄ (Zn/P = 1) mit Zitronensäure als Chelatkomplexbildner (CS), CS/Zn = 0,1/1

2,97 g Zinknitrat-hexahydrat (0,01 mol) und 0,19 g Zitronensäure (0,001 mol) wurden in 9,48 g de-ionisiertem Wasser gelöst und für 1 h gerührt. Parallel wurden 1,42 g Na₂HPO₄ (0,01 mol) in 12,8 g de-ionisiertem Wasser gelöst und in die Zinknitrat-hexahydrat Lösung eingetropft. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 6:

### Zinkphosphat-Partikel aus Zinknitrat-hexahydrat und Na₂HPO₄ (Zn/P = 1) mit Zitronensäure als Chelatkomplexbildner (CS), CS/Zn = 0,8/1

2,97 g Zinknitrat-hexahydrat (0,01 mol) und 1,5 g (0,008 mol) Zitronensäure wurden in 13,5 g de-ionisiertem Wasser gelöst und für 1 h gerührt. Parallel werden 1,42 g Na₂HPO₄ (0,01 mol) in 12,8 g de-ionisiertem Wasser gelöst und in die Zinknitrat-hexahydrat Lösung eingetropft. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 7:

### Zinkphosphat-Partikel aus Zinknitrat-hexahydrat und Na₂HPO₄ (Zn/P = 1) in DEG/H₂O = 3,5 mit Zitronensäure als Chelatkomplexbildner (CS), CS/Zn = 0,5/1

2,97 g Zinknitrat-hexahydrat (0,01 mol) und 0,96 g (0,005 mol) Zitronensäure wurden in 10,6 ml Diethylenglykol (11,9 g) gelöst und für 1 h gerührt. Parallel werden 1,42 g Na₂HPO₄ (0,01 mol) in einer de-ionisiertem Wasser (12,8 g) / Diethylenglykol (DEG, 33,5 g)-Mischung gelöst, für 1 h gerührt und auf einmal in die Zinknitrat-hexahydrat Lösung zugegeben. Auf diese Zusammensetzung bezieht sich das Gewichtsverhältnis DEG/H₂O. Die erhaltene Partikel enthaltende Mischung wurde für 24 h weitergerührt. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 8:

### Zinkphosphat-Partikel aus Zinknitrat-hexahydrat und Na₂HPO₄ (Zn/P = 1) in DEG/H₂O = 16,9 mit Zitronensäure als Chelatkomplexbildner (CS), CS/Zn = 0,5/1

2,97 g Zinknitrat-hexahydrat (0,01 mol) und 0,96 g (0,005 mol) Zitronensäure wurden in 10,6 ml Diethylenglykol gelöst und für 1 h gerührt. Parallel werden 1,42 g Na₂HPO₄ (0,01 mol) in einer de-ionisiertem Wasser (3,25 g) / Diethylenglykol (43 g)-Mischung gelöst, für 1 h gerührt und auf einmal in die Zinknitrat-hexahydrat Lösung zugegeben und für 24 h weitergerührt. Das Zinkphosphat-Präzipitat wurde abzentrifugiert, dreimal mit de-ionisiertem Wasser gewaschen, zwischendurch jeweils erneut zentrifugiert (400 U/min, 30 min bei 18 °C) und anschließend 24 h bei 30 °C unter Vakuum getrocknet.

### Beispiel 9:

### Zinkphosphat-Partikel aus Zinknitrat-hexahydrat und Na₂HPO₄ (Zn/P = 1) in DEG/H₂O = 0,25 mit Zitronensäure als Chelatkomplexbildner (CS), CS/Zn = 0,5/1

2,97 g Zinknitrat-hexahydrat (0,01 mol) und 0,96 g (0,005 mol) Zitronensäure wurden in 10,6 ml Diethylenglykol gelöst und für 1 h gerührt. Parallel werden 1,42 g Na₂HPO₄ (0,01 mol) in de-ionisiertem Wasser (46,23 g) gelöst, für 1 h gerührt und auf einmal in die Zinknitrat-hexahydrat Lösung zugegeben und für 24 h weitergerührt. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 10:

### Zinkphosphat-Partikel aus Zinknitrat-hexahydrat und Na₂HPO₄ (Zn/P = 1,6) in DEG mit Zitronensäure als Chelatkomplexbildner (CS), CS/Zn = 0,5/1

4,56 g Zinknitrat-hexahydrat (0,016 mol) und 1,6 g (0,008 mol) Zitronensäure wurden in 17,6 ml Diethylenglykol gelöst und für 1 h gerührt. Parallel werden 1,42 g Na₂HPO₄ (0,01 mol) in Diethylenglykol (125,8 ml) für 1 h gerührt und auf einmal in die Zinknitrat-hexahydrat Lösung zugegeben und für 24 h weitergerührt. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 11:

### Zinkphosphat-Partikel aus Zinkacetat-di-hydrat und 85 %-iger H₃PO₄ (Zn/P = 1,5) mit Äpfelsäure als Chelatkomplexbildner (CS), CS/Zn = 1/1

3,29 g (15 mmol) Zinkacetat-di-hydrat wurde in 9,87 g de-ionisiertem Wasser gelöst (25 Gew.-%) und 2,01 g (15 mmol) Äpfelsäure, gelöst in 6,03 g de-ionisiertem Wasser (25 Gew.-%), unter Rühren (ca. 500 U/min) zugegeben. Anschließend wurde für 1 h weiter gerührt. Nachfolgend wurde 1,15 g H₃PO₄ (85 %) unter Rühren (ca. 750 U/min) bei 23 °C kontinuierlich tropfenweise zugegeben. Erst nach ca. 2 min bildete sich das Zinkphosphat-Präzipitat, welches noch weitere 24 h bei 600 U/min gerührt wurde. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 12:

### Zinkphosphat-Partikel aus Zinkacetat-di-hydrat und 85 %-iger H₃PO₄ (Zn/P = 1,5) mit Äpfelsäure als Chelatkomplexbildner (CS), CS/Zn = 1,5/1

3,29 g (15 mmol) Zinkacetat-di-hydrat wurde in 9,87 g de-ionisiertem Wasser gelöst (25 Gew.-%) und 3,01 g (22,5 mmol) Äpfelsäure, gelöst in 9,06 g de-ionisiertem Wasser (25 Gew.-%), unter Rühren (ca. 500 U/min) zugegeben. Anschließend wurde für 1 h weiter gerührt. Nachfolgend wurde 1,15 g H₃PO₄ (85 %) unter Rühren (ca. 750 U/min) bei 23 °C kontinuierlich tropfenweise zugegeben. Erst nach ca. 10 min bildete sich das Zinkphosphat-Präzipitat, welches noch weitere 24 h bei 600 U/min gerührt wurde. Das Zinkphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 13:

### (Zink-Mangan)-Phosphat Partikel aus Zinkacetat-dihydrat und Manganacetat-tetra-hydrat, 85 %-iger H₃PO₄ (Zn,Mn)/P = 1,5) ohne Chelatkomplexbildner (CS), (Zn/Mn = 2/1), (Zn₂Mn)₃(PO₄)₂

2,19 g (10 mmol) Zinkacetat di-hydrat wurde in 6,57 g de-ionisiertem Wasser gelöst (25 Gew.-%) und 1,23 g (5 mmol) Manganacetat tetra-hydrat, gelöst in 3,69 g de-ionisiertem Wasser (25 Gew.-%), unter Rühren (ca. 300 U/min) zugegeben. Anschließend wurde 1,15 g H₃PO₄ (85 %) bei 23 °C unter Rühren (ca. 1000 U/min) kontinuierlich tropfenweise zugegeben. Es bildete sich das Zink-Manganphosphat-Präzipitat und die erhaltene Mischung wurde für 24 h bei 600 U/min weiter gerührt. Das Zink-Manganphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 14:

### (Zink-Mangan)-Phosphat Partikel aus Zinkacetat-dihydrat und Manganacetat-tetra-hydrat, 85 %-iger H₃PO₄ (Zn,Mn)/P = 1,5) ohne Chelatkomplexbildner (CS) (Zn/Mn = 1/2), (ZnMn₂)₃(PO₄)₂

1,097 g (5 mmol) Zinkacetat di-hydrat wurde in 3,30 g de-ionisiertem Wasser gelöst (25 Gew.-%) und 2,45 g (10 mmol) Manganacetat tetra-hydrat, gelöst in 7,35 g de-ionisiertem Wasser (25 Gew.-%), unter Rühren (ca. 300 U/min) zugegeben. In diese Mischung wurde 1,15 g H₃PO₄ (85 %) bei 23 °C unter Rühren (ca. 1000 U/min) kontinuierlich tropfenweise zugegeben. Es bildete sich das Zink-Manganphosphat-Präzipitat und die erhaltene Mischung wurde für 24 h bei 600 U/min weiter gerührt. Das Zink-Manganphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 15:

### (Zink-Mangan)-Phosphat Partikel aus Zinkacetat-dihydrat und Manganacetat-tetra-hydrat, 85 %-iger H₃PO₄ (Zn,Mn)/P = 1,5) mit Zitronensäure als Chelatkomplexbildner (CS) (Zn/Mn = 2/1), CS/(Zn,Mn) = 1/1, (Zn₂Mn)₃(PO₄)₂

2,19 g (10 mmol) Zinkacetat di-hydrat wurde in 6,57 g de-ionisiertem Wasser gelöst (25 Gew.-%) und 1,23 g (5 mmol) Manganacetat tetra-hydrat, gelöst in 3,69 g de-ionisiertem Wasser (25 Gew.-%), unter Rühren (ca. 300 U/min) zugegeben. In diese beiden Mischung wurde 2,88 g (15 mmol) Zitronensäure mono-hydrat, gelöst in 8,64 g Wasser (25 Gew.-%) unter Magnet-Rühren (ca. 500 U/min) zugegeben. Anschließend wurde für 1 h weitergerührt. Nachfolgend wurde 1,15 g H₃PO₄ (85 %) bei 23 °C unter Rühren (ca. 750 U/min) kontinuierlich tropfenweise zugegeben. Erst nach ca. 20 h bildete sich das Zink-Manganphosphat Präzipitat, welches noch weitere 24 h bei 600 U/min gerührt wurde. Das Zink-Manganphosphat-Präzipitat wurde abzentrifugiert, dreimal mit de-ionisiertem Wasser gewaschen und zwischendurch jeweils erneut zentrifugiert (4000 U/min, 30 min bei 18 °C) und anschließend 24 h bei 30 °C unter Vakuum getrocknet.

### Beispiel 16:

### (Zink-Mangan)-Phosphat Partikel aus Zinkacetat-dihydrat und Manganacetat-tetra-hydrat, 85 %-iger H₃PO₄ (Zn,Mn)/P = 1,5) mit Zitronensäure als Chelatkomplexbildner (CS) (Zn/Mn = 1/2), CS/(Zn,Mn) = 1/1, (Zn₂Mn)₃(PO₄)₂

1,097 g (5 mmol) Zinkacetat di-hydrat wurde in 3,3 g de-ionisiertem Wasser gelöst (25 Gew.-%) und 2,45 g (10 mmol) Manganacetat tetra-hydrat, gelöst in 7,35 g de-ionisiertem Wasser (25 Gew.-%), unter Rühren (ca. 300 U/min) zugegeben. In diese beiden Mischung wurde 2,88 g (15 mmol) Zitronensäure mono-hydrat, gelöst in 8,64 g Wasser (25 Gew.-%) unter Magnet-Rühren (ca. 500 U/min) zugegeben. Anschließend wurde für 1 h weitergerührt. Nachfolgend wurde 1,15 g H₃PO₄ (85 %) bei 23 °C unter Rühren (ca. 750 U/min) kontinuierlich tropfenweise zugegeben. Erst nach ca. 20 h bildete sich das Zink-Manganphosphat Präzipitat, welches noch weitere 24 h bei 600 U/min gerührt wurde. Das Zink-Manganphosphat-Präzipitat wurde abzentrifugiert, dreimal mit de-ionisiertem Wasser gewaschen, zwischendurch jeweils erneut zentrifugiert (4000 U/min, 30 min bei 18 °C) und anschließend 24 h bei 30 °C unter Vakuum getrocknet.

### Beispiel 17:

### Zinkphosphat-Partikel aus Zinknitrat-hexahydrat und Na₂HPO₄ (Zn/P = 1) mit Äpfelsäure als Chelatkomplexbildner (CS), CS/Zn = 0,8/1

2,97 g Zinknitrat-hexahydrat (0,01 mol) und 1,07 g (0,008 mol) Äpfelsäure wurden in 12,1 g de-ionisiertem Wasser gelöst und für 1 h gerührt. Parallel werden 1,42 g Na₂HPO₄ (0,01 mol) in 12,8 g de-ionisiertem Wasser gelöst und in die Zinknitrat-hexahydrat Lösung unter Rühren (ca. 750 U/min) eingetropft und für 24 h bei 600 U/min weiter gerührt. Das Zinkphosphat-Präzipitat wurde abzentrifugiert, dreimal mit de-ionisiertem Wasser gewaschen und zwischendurch jeweils erneut zentrifugiert (4000 U/min, 30 min bei 18 °C) und anschließend 24 h bei 30°C unter Vakuum getrocknet.

### Beispiel 18: (Vergleichsbeispiel ohne Chelatkomplexbildner)

### Manganphosphat-Partikel aus Manganacetat-tetra-hydrat und 85 %-iger H₃PO₄ (Mn/P = 1,5) ohne Chelatkomplexbildner (CS), CS/Mn = 0/1

3,68 g (15 mmol) Manganacetat-tetra-hydrat wurde in 9,87 g de-ionisiertem Wasser gelöst (25 Gew.-%) und 1,15 g H₃PO₄ (85 %) unter Rühren (ca. 1000 U/min) kontinuierlich tropfenweise zugegeben (23 °C). Es bildete sich das Manganphosphat-Präzipitat. Die erhaltene Mischung wurde für 24 h bei 600 U/min weiter gerührt. Das Manganphosphat-Präzipitat wurde abzentrifugiert, dreimal mit de-ionisiertem Wasser gewaschen und zwischendurch jeweils erneut zentrifugiert (4000 U/min, 30 min bei 18 °C) und anschließend 24 h bei 30 °C unter Vakuum getrocknet.

### Beispiel 19:

### Manganphosphat-Partikel aus Manganacetat-tetra-hydrat und 85 %-iger H₃PO₄ (Mn/P = 1,5) mit Zitronensäure als Chelatkomplexbildner (CS), CS/Mn = 0.166/1

3,68 g (15 mmol) Manganacetat-di-hydrat wurde in 9,87 g de-ionisiertem Wasser gelöst (25 Gew.-%) und 0,480 g (2,5 mmol) Zitronensäure mono-hydrat, gelöst in 1,44 g de-ionisiertem Wasser (25 Gew.-%), unter Rühren (ca. 500 U/min) zugegeben. Anschließend wurde für 1 h weiter gerührt. Nach 1 h wurde 1,15 g H₃PO₄ (85 %) unter Rühren (ca. 1000 U/min) bei 23 °C kontinuierlich tropfenweise zugegeben. Es bildete sich das Manganphosphat-Präzipitat. Die erhaltene Mischung wurde für 24 h bei 600 U/min weiter gerührt. Das Manganphosphat-Präzipitat wurde abzentrifugiert, dreimal mit de-ionisiertem Wasser gewaschen und zwischendurch jeweils erneut zentrifugiert (4000 U/min, 30 min bei 18 °C) und anschließend 24 h bei 30 °C unter Vakuum getrocknet.

### Beispiel 20:

### Manganphosphat-Partikel aus Manganacetat-tetra-hydrat und 85 %-iger H₃PO₄ (Mn/P = 1,5) mit Zitronensäure als Chelatkomplexbildner (CS), CS/Mn = 1/1

3,68 g (15 mmol) Manganacetat-tetra-hydrat wurde in 11,04 g de-ionisiertem Wasser gelöst (25 Gew.-%) und 2,88 g (15 mmol) Zitronensäure mono-hydrat, gelöst in 8,64 g de-ionisiertem Wasser (25 Gew.-%), unter Rühren (ca. 500 U/min) zugegeben. Anschließend wurde für 30 min weiter gerührt. Nach 1 h wurde 1,15 g H₃PO₄ (85 %) unter Rühren (ca. 1000 U/min) bei 23 °C kontinuierlich tropfenweise zugegeben. Erst nach ca. 8 h bildete sich das Manganphosphat-Präzipitat, welches noch weitere 24 h bei 600 U/min gerührt wurde. Das Manganphosphat-Präzipitat wurde abzentrifugiert, dreimal mit de-ionisiertem Wasser gewaschen und zwischendurch jeweils erneut zentrifugiert (4000 U/min, 30 min bei 18 °C) und anschließend 24 h bei 30 °C unter Vakuum getrocknet.

### Beispiel 21:

### Herstellung eines Kompositmaterials aus Zinkphosphat-Partikeln und einem thermisch härtendem Epoxidharz

3,6 g Bis-Phenol-A-Epoxidharz (Beckopox EP307, Cytec) wurde in 9,6 g Butylacetat gelöst und mit 1,69 g Phenolharzlösung (Phenodur PR722 / 53BG / B, Cytec) versetzt. Anschließend wurden 0,1 g Zinkphosphat-Partikel aus Beispiel 2 unter Rühren zugegeben. Die erhaltene Mischung wurde für 2 h weitergerührt, durch Tauchbeschichtung auf Glasobjektträger aufgebracht und bei 200°C für 30 min thermisch gehärtet. Es bildete sich eine transluzente Beschichtung.

### Beispiel 22:

### Herstellung eines Kompositmaterials aus Zinkphosphat-Partikeln und einem UV-härtendem Epoxidharz

2,47 g cyloaliphatisches Epoxidharz (Araldit-CY -179, Huntsman) und 2,47 g Bis-Phenol-A-Epoxyharz (Beckopox EP128, Cytec) wurden mit 1,30 g Trimethylol propane oxetane als Reaktivverdünner gemischt. Anschließend wurden 0,1 g Zinkphosphat-Partikel aus Beispiel 2 unter Rühren zugegeben. Die erhaltene Mischung wurde für 2 h weitergerührt, mit 0,13 g UV-6974 (Cyracure Photoinitiator, Dow) versetzt, durch Tauchbeschichtung auf Glasobjektträger aufgebracht und anschließend UV-gehärtet (UV-Härtungsstand Fa. Beltron, 2 Lampen, ½ Leistung, 2 m/min). Es bildete sich eine transluzente Beschichtung.

**Tabelle 1**

| **Probe** | **C / %** | **H / %** | **N / %** |
|---|---|---|---|
| 1x zentrifugiert | ≤ 0,3 | 2,13 | - |
| 2x zentrifugiert | ≤ 0,2 | 1,72 | - |
| 4x zentrifugiert | ≤ 0,3 | 1,70 | - |

**Tabelle 2**

| **Probe** | **C / %** | **H / %** | **N / %** |
|---|---|---|---|
| 1x zentrifugiert | ≤ 0,8 | 1,81 | <_ 0,4 |
| 2x zentrifugiert | ≤ 0,2 | 1,77 | <_ 0,1 |
| 4x zentrifugiert | ≤ 0,2 | 1,73 | <_ 0,1 |

**Tabelle 3: L: mittlere Längenverteilung der langen Längsachse der Plättchen, D: mittlere Dickenverteilung der Plättchen, AV= mittleres Aspektverhältnis aus 20 Bestimmungen von Aspektverhältnissen von Einzelpartikeln ermittelt aus REM, AVₘₐₓ= maximales Aspektverhältnis aus Einzelpartikel-Bestimmung.**

| **CS** | **L / µm** | **D / µm** | **AV** | **AVₘₐₓ** |
|---|---|---|---|---|
| Maleinsäure | 11,81 ± 4,07 | 1,46 ± 0,50 | 8,39 ± 2,07 | 9,98 |
| Äpfelsäure | 11,36 ± 4,77 | 0,76 ± 0,24 | 16,32 ± 7,67 | 28,29 |
| Zitronensäure | 14,18 ± 5,09 | 0,91 ± 0,32 | 17,80 ± 10,58 | 34,33 |
| Ascorbinsäure | 9,09 ± 4,17 | 1,36 ± 0,32 | 6,77 ± 2,73 | 9,97 |

### zitierte Literatur

Yuan et al. Applied Mechanics and Materials, 2012, 236-237, 105-108.
McCurdy et al. Materials Research Bulletin 2008, 43, 1836-1841. Lubkowski et al. Rev.Adv.Mater.Sci. 2007, 14, 46-48.
DE2842150
DE3046697 A1
US 4153479
EP 0896641 B1
DE 69706161 T2
US 5137567
US 5030285
DE1815112

## Patentansprüche

1. Verfahren zur Herstellung von anisotropen plättchenförmigen Zink-Phosphat-Partikeln oder anisotropen plättchenförmigen Zink-Metall-Mischphosphat-Partikeln umfassend folgende Schritte:
a) Herstellen einer Zusammensetzung umfassend mindestens eine Phosphatverbindung; mindestens eine Zinkverbindung und mindestens einen Chelatkomplexbildner mit mindestens zwei sauerstoffhaltigen Gruppen, ausgewählt aus der Gruppe umfassend Karbonsäuregruppen, Karbonsäureanhydridgruppen, Ethergruppen, Estergruppen, Ketogruppen und Hydroxylgruppen, und mindestens ein Lösungsmittel,
b) Bildung von anisotropen Zink-Phosphat-Partikeln oder Zink-Metall-Mischphosphat-Partikeln;
c) Abtrennung der erhaltenen plättchenförmigen Partikel, wobei die Bildung der Partikel für mindestens 10 Stunden erfolgt, wobei die Partikel in mindestens zwei Dimensionen eine Ausdehnung von mindestens 1 µm aufweisen, und die Partikel ein Aspektverhältnis von > 2 von Länge zu Dicke aufweisen und die maximale Ausdehnung der Partikel bei 100 µm liegt.

2. Verfahren nach Anspruch 1, **dadurch gekennzeichnet, dass** Schritt b) bei einer Temperatur von unter 50 °C erfolgt.

3. Verfahren nach einem der Ansprüche 1 oder 2, **dadurch gekennzeichnet, dass** es sich um eine wäßrige Zusammensetzung handelt und der Gehalt an Zn bei über 0,5 Gew.-% bezogen auf Zn²⁺ liegt.

4. Verfahren nach einem der Ansprüche 1 bis 3, **dadurch gekennzeichnet, dass** die Zusammensetzung einen pH-Wert von unter 3,5 aufweist.

5. Verfahren nach einem der Ansprüche 1 bis 4, **dadurch gekennzeichnet, dass**
die mindestens eine Phosphorverbindung Phosphorsäure und/oder ein Alkalisalz der Phosphorsäure ist.

6. Verfahren nach einem der Ansprüche 1 bis 5, **dadurch gekennzeichnet, dass**
die mindestens eine Zinkverbindung ein Zinksalz ist.

7. Verfahren nach einem der Ansprüche 1 bis 6, **dadurch gekennzeichnet, dass**
der mindestens eine Chelatkomplexbildner eine organische Karbonsäure mit einem pKs-Wert < 6 ist.

8. Verfahren nach einem der Ansprüche 1 bis 7, **dadurch gekennzeichnet, dass**
der mindestens eine Chelatkomplexbildner ausgewählt ist aus der Gruppe umfassend α-Hydroxycarbonsäuren, Zitronensäure, Äpfelsäure, Weinsäure, Ascorbinsäure, Mandelsäure, Glyoxalsäure, Malonsäure, Milchsäure, Essigsäure, Fumarsäure, Maleinsäure, Gluconsäure, Phthalsäure und Adipinsäure.

9. Verfahren nach einem der Ansprüche 1 bis 8, **dadurch gekennzeichnet, dass**
die Zusammensetzung umfassend mindestens eine Zinkverbindung zusätzlich mindestens eine weitere Metallverbindung umfasst.

10. Verfahren nach Anspruch 9, **dadurch gekennzeichnet, dass**
die mindestens eine weitere Metallverbindung ausgewählt ist aus Verbindungen von Mangan, Magnesium, Calcium, Strontium, Eisen, Cer, Aluminium, Nickel oder Kobalt.

11. Verfahren nach einem der Ansprüche 1 bis 10, **dadurch gekennzeichnet, dass**
das molare Verhältnis von dem mindestens einen Chelatkomplexbildner (CS) und der mindestens einen Zinkverbindung und optional der weiteren Metallverbindung bei 0,33/1 bis 1,6/1 liegt.

## Claims

1. Process for producing anisotropic flake-shaped zinc phosphate particles or anisotropic flake-shaped zinc metal mixed phosphate particles comprising the steps of:
a) producing a composition comprising at least one phosphate compound, at least one zinc compound and at least one chelate complex former having at least two oxygen-containing groups selected from the group comprising carboxylic acid groups, carboxylic anhydride groups, ether groups, ester groups, ketone groups and hydroxyl groups, and at least one solvent,
b) forming anisotropic zinc phosphate particles or zinc metal mixed phosphate particles;
c) separating the obtained flake-shaped particles, wherein the formation of the particles is carried out for at least 10 hours, wherein the particles have an extent of at least 1 µm in at least two dimensions and the particles have an aspect ratio of > 2 of length to thickness and the maximum extent of the particles is 100 µm.

2. Process according to Claim 1, **characterized in that** step b) is carried out at a temperature of less than 50°C.

3. Process according to either of Claims 1 or 2, **characterized in that** an aqueous composition is concerned and the content of Zn is more than 0.5% by weight based on Zn²⁺.

4. Process according to any of Claims 1 to 3, **characterized in that** the composition has a pH of less than 3.5.

5. Process according to any of Claims 1 to 4, **characterized in that**
the at least one phosphorus compound is phosphoric acid and/or an alkali metal salt of phosphoric acid.

6. Process according to any of Claims 1 to 5, **characterized in that**
the at least one zinc compound is a zinc salt.

7. Process according to any of Claims 1 to 6, **characterized in that**
the at least one chelate complex former is an organic carboxylic acid having a pKa value < 6.

8. Process according to any of Claims 1 to 7, **characterized in that**
the at least one chelate complex former is selected from the group comprising α-hydroxycarboxylic acids, citric acid, malic acid, tartaric acid, ascorbic acid, mandelic acid, glyoxalic acid, malonic acid, lactic acid, acetic acid, fumaric acid, maleic acid, gluconic acid, phthalic acid and adipic acid.

9. Process according to any of Claims 1 to 8, **characterized in that**
the composition comprising at least one zinc compound additionally comprises at least one further metal compound.

10. Process according to Claim 9, **characterized in that** the at least one further metal compound is selected from compounds of manganese, magnesium, calcium, strontium, iron, cerium, aluminium, nickel or cobalt.

11. Process according to any of Claims 1 to 10, **characterized in that**
the molar ratio of the at least one chelate complex former (CS) to the at least one zinc compound and optionally the further metal compound is 0.33:1 to 1.6:1.

## Revendications

1. Procédé de préparation de particules anisotropes, en forme de plaquettes, de phosphate de zinc ou de particules anisotropes, en forme de plaquettes, de phosphate mixte de zinc et de métal, comprenant les étapes suivantes :
a) préparation d'une composition comprenant au moins un composé de phosphate ; au moins un composé de zinc et au moins un agent de formation de complexe chélaté présentant au moins deux groupes contenant de l'oxygène, choisis dans le groupe comprenant les groupes acide carboxylique, anhydride d'acide carboxylique, éther, ester, céto et hydroxyle, et au moins un solvant,
b) formation de particules anisotropes de phosphate de zinc ou de phosphate mixte de zinc et de métal ;
c) séparation des particules sous forme de plaquettes obtenues, la formation des particules ayant lieu pendant au moins 10 heures, les particules présentant dans au moins deux dimensions une extension d'au moins 1 µm et les particules présentant un rapport d'aspect > 2 de longueur à épaisseur et l'extension maximale des particules se situant à 100 µm.

2. Procédé selon la revendication 1, **caractérisé en ce que** l'étape b) a lieu à une température inférieure à 50°C.

3. Procédé selon l'une des revendications 1 ou 2, **caractérisé en ce qu'**il s'agit d'une composition aqueuse et la teneur en Zn est supérieure à 0,5% en poids, par rapport au Zn²⁺.

4. Procédé selon l'une des revendications 1 à 3, **caractérisé en ce que** la composition présente un pH inférieur à 3,5.

5. Procédé selon l'une des revendications 1 à 4, **caractérisé en ce que** ledit au moins un composé de phosphore est l'acide phosphorique et/ou un sel alcalin de l'acide phosphorique.

6. Procédé selon l'une des revendications 1 à 5, **caractérisé en ce que** ledit au moins un composé de zinc est un sel de zinc.

7. Procédé selon l'une des revendications 1 à 6, **caractérisé en ce que** ledit au moins un agent de formation de complexe chélaté est un acide carboxylique organique présentant une valeur pKa < 6.

8. Procédé selon l'une des revendications 1 à 7, **caractérisé en ce que** ledit au moins un agent de formation de complexe chélaté est choisi dans le groupe comprenant les acides α-hydroxycarboxyliques, l'acide citrique, l'acide malique, l'acide tartrique, l'acide ascorbique, l'acide mandélique, l'acide glyoxalique, l'acide malonique, l'acide lactique, l'acide acétique, l'acide fumarique, l'acide maléique, l'acide gluconique, l'acide phtalique et l'acide adipique.

9. Procédé selon l'une des revendications 1 à 8, **caractérisé en ce que** la composition comprenant au moins un composé de zinc comprend en outre au moins un autre composé de métal.

10. Procédé selon la revendication 9, **caractérisé en ce que** ledit au moins un autre composé de métal est choisi parmi les composés de manganèse, de magnésium, de calcium, de strontium, de fer, de cérium, d'aluminium, de nickel ou de cobalt.

11. Procédé selon l'une des revendications 1 à 10, **caractérisé en ce que** le rapport molaire dudit au moins un agent de formation de complexe chélaté (CS) et dudit au moins un composé de zinc et éventuellement de l'autre composé de métal se situe à 0,33/1 jusqu'à 1,6/1.
